# EUROPEAN PATENT APPLICATION

(11) **EP 4 210 178 A1**
(43) Date of publication of application: **12.07.2023**
(21) Application number: 21884668.1
(22) Date of filing: 31.08.2021
(51) Int. Cl.: H01R 13/60

(54) **POWER ADAPTER AND ELECTRONIC DEVICE ASSEMBLY**

(30) Priority: 28.10.2020 CN 202011176120; 28.10.2020 CN 202022444616 U
(71) Applicant: GUANGDONG OPPO MOBILE TELECOMMUNICATIONS CORP., LTD., Dongguan, Guangdong 523860 (CN)
(72) Inventor: ZUO, Zhouquan, Dongguan, Guangdong 523860 (CN)
(74) Representative: Mewburn Ellis LLP
(86) International application number: PCT/CN2021/115714
(87) International publication number: WO 2022/088936

(57) **Abstract**

A power adapter and an electronic device assembly are provided. The power adapter includes a housing, a push-pull holder, and a prong. The housing defines an accommodating space. The push-pull holder slidably fits the accommodating space for sliding back and forth between a first position and a second position opposite the first position. The prong is movably connected with the push-pull holder. When the push-pull holder slides to the first position, the prong moves to a state in which the prong is closed relative to the push-pull holder and accommodated in the accommodating space. When the push-pull holder slides to the second position, the prong moves to a state in which the prong is open relative to the push-pull holder and an end of the prong is away from the accommodating space. The push-pull holder slidably fits the housing, and the prong is movably connected with the push-pull holder. When the prong slides along with the push-pull holder to the first position, the prong is accommodated in the accommodating space. When the prong slides along with the push-pull holder to the second position, the end of the prong is away from the accommodating space. As such, it is conducive to swiftness, convenience, labor saving, and safety in use of the power adapter.

## Description

### CROSS-REFERENCE TO RELATED APPLICATION(S)

This application claims priority to and the benefit of Chinese Patent Application No. 202011176120.9 and Chinese Patent Application No. 202022444616.1, filed October 28, 2020 and entitled "POWER ADAPTER AND ELECTRONIC DEVICE AS SENMLY", the entire disclosures of which are hereby incorporated by reference.

### TECHNICAL FIELD

This disclosure relates to the field of communication devices, and particularly to a power adapter and an electronic device assembly.

### BACKGROUND

At present, power adapters are provided with retractable prongs, which is convenient for carrying the power adapter. However, it is required for a user to touch the prongs to make the prongs extend out from or retract into the power adapter, i.e., pull the prongs out of an accommodating groove of the power adapter, or press the prongs into the accommodating groove of the power adapter, which causes inconvenience in use of the power adapter.

### SUMMARY

Implementations of the disclosure provide a power adapter. The power adapter includes a housing, a push-pull holder, and a prong. The housing defines an accommodating space. The push-pull holder slidably fits the accommodating space for sliding back and forth between a first position and a second position opposite the first position. The prong is movably connected with the push-pull holder. When the push-pull holder slides to the first position, the prong moves to a state in which the prong is closed relative to the push-pull holder and accommodated in the accommodating space. When the push-pull holder slides to the second position, the prong moves to a state in which the prong is open relative to the push-pull holder and an end of the prong is away from the accommodating space.

Implementations of the disclosure provide an electronic device assembly. The electronic device assembly includes the power adapter described above. The electronic device assembly further includes an electronic device. The power adapter is configured to be electrically connected with the electronic device, and configured to transmit a current to the electronic device when the prong is plugged into a power socket.

### BRIEF DESCRIPTION OF THE DRAWINGS

In order to illustrate technical solutions of implementations of the disclosure more clearly, the following will give a brief introduction to the accompanying drawings used in the implementations. Apparently, the accompanying drawings described below are merely some implementations of the disclosure. Those of ordinary skill in the art can further obtain other accompanying drawings based on the accompanying drawings without creative efforts.
FIG. 1 is a schematic perspective view of a power adapter provided in a first implementation of the disclosure.
FIG. 2 is a schematic perspective view of the power adapter provided in the first implementation of the disclosure, the power adapter being in another state.
FIG. 3 is a schematic cross-sectional view of the power adapter in FIG. 2.
FIG. 4 is a schematic cross-sectional view of the power adapter in FIG. 1.
FIG. 5 is a schematic exploded view of the power adapter in FIG. 1.
FIG. 6 is a schematic partial cross-sectional view of the power adapter in FIG. 1.
FIG. 7 is a schematic partial cross-sectional view of the power adapter in FIG. 2.
FIG. 8 is a schematic partial enlarged view of part VII of the power adapter in FIG. 7.
FIG. 9 is a schematic cross-sectional view of a power adapter provided in a second implementation of the disclosure.
FIG. 10 is a schematic cross-sectional view of the power adapter provided in the second implementation of the disclosure, the power adapter being in another state.
FIG. 11 is a schematic cross-sectional view of a power adapter provided in a third implementation of the disclosure.
FIG. 12 is a schematic cross-sectional view of the power adapter provided in the third implementation of the disclosure, the power adapter being in another state.
FIG. 13 is a schematic cross-sectional view of a power adapter provided in a fourth implementation of the disclosure.
FIG. 14 is a schematic cross-sectional view of the power adapter provided in the fourth implementation of the disclosure, the power adapter being in another state.
FIG. 15 is a schematic cross-sectional view of a power adapter provided in a fifth implementation of the disclosure.
FIG. 16 is a schematic cross-sectional view of the power adapter provided in the fifth implementation of the disclosure, the power adapter being in another state.
FIG. 17 is a schematic perspective exploded view of the power adapter provided in the first implementation of the disclosure.
FIG. 18 is a schematic partial exploded view of the power adapter in FIG. 17.
FIG. 19 is a schematic partial exploded view of a power adapter provided in a sixth implementation of the disclosure.
FIG. 20 is a schematic perspective exploded view of a power adapter provided in a seventh implementation of the disclosure.
FIG. 21 is a schematic top view of the power adapter in FIG. 20.
FIG. 22 is a schematic cross-sectional view of the power adapter in FIG. 21, taken along line II-II.
FIG. 23 is a schematic partial enlarged view of the power adapter in FIG. 22.
FIG. 24 is a schematic partial enlarged view of the power adapter in FIG. 22, the power adapter being in another state.
FIG. 25 is a schematic partial enlarged view of the power adapter in FIG. 22, the power adapter being in another state.
FIG. 26 is a schematic partial enlarged view of the power adapter in FIG. 22, the power adapter being in another state.
FIG. 27 is a schematic cross-sectional view of a power adapter provided in an eighth implementation of the disclosure.
FIG. 28 is a schematic cross-sectional view of the power adapter provided in the eighth implementation of the disclosure, the power adapter being in another state.
FIG. 29 is a schematic cross-sectional view of a power adapter provided in a ninth implementation of the disclosure.
FIG. 30 is a schematic cross-sectional view of the power adapter provided in the ninth implementation of the disclosure, the power adapter being in another state.
FIG. 31 is a schematic cross-sectional view of a power adapter provided in a tenth implementation of the disclosure.
FIG. 32 is a schematic cross-sectional view of the power adapter provided in the first implementation of the disclosure.
FIG. 33 is a schematic partial enlarged view of part V of the power adapter in FIG. 32.
FIG. 34 is a schematic partial cross-sectional view of the power adapter in FIG. 32.
FIG. 35 is another schematic perspective view of the power adapter provided in the first implementation of the disclosure.
FIG. 36 is a schematic partial view of an interior of the power adapter in FIG. 35.
FIG. 37 is another schematic partial view of the interior of the power adapter in FIG. 35.
FIG. 38 is a schematic view of the power adapter in FIG. 37, the power adapter being in another state.
FIG. 39 is a schematic exploded view of the power adapter in FIG. 35.
FIG. 40 is another schematic perspective view of the power adapter provided in the first implementation of the disclosure.
FIG. 41 is a schematic perspective view of the power adapter in FIG. 40, the power adapter being in another state.
FIG. 42 is a schematic view of a power adapter provided in an eleventh implementation of the disclosure.
FIG. 43 is a schematic view of a power adapter provided in a twelfth implementation of the disclosure.
FIG. 44 is a schematic view of the power adapter provided in the twelfth implementation of the disclosure.
FIG. 45 is a schematic partial cross-sectional view of the power adapter provided in the first implementation of the disclosure.
FIG. 46 is a schematic partial cross-sectional view of the power adapter in FIG. 45, the power adapter being in another state.
FIG. 47 is a schematic partial cross-sectional view of a power adapter provided in a thirteenth implementation of the disclosure.
FIG. 48 is a schematic partial cross-sectional view of a power adapter provided in a fourteenth implementation of the disclosure.
FIG. 49 is a schematic cross-sectional view of a power adapter provided in a fifteenth implementation of the disclosure.
FIG. 50 is a schematic cross-sectional view of a power adapter provided in a sixteenth implementation of the disclosure.
FIG. 51 is another schematic cross-sectional view of the power adapter provided in the sixteenth implementation of the disclosure.
FIG. 52 is a schematic view of an electronic device assembly provided in implementations of the disclosure.

### DETAILED DESCRIPTION

Technical solutions of implementations of the disclosure will be described clearly and completely with reference to accompanying drawings in implementations of the present disclosure. Apparently, implementations described herein are merely some implementations, rather than all implementations, of the disclosure. Based on the implementations described herein, all other implementations obtained by those of ordinary skill in the art without creative effort shall fall within the protection scope of the disclosure.

In illustrations of implementations of the disclosure, it should be understood that a direction or positional relationship indicated by terms such as "thickness" and the like is a direction or positional relationship based on accompanying drawings and is only for the sake of convenience and simplicity of illustration of implementations of the disclosure, rather than explicitly or implicitly indicate that apparatuses or components referred to herein must have a certain orientation or be configured or operated in a certain orientation and therefore cannot be understood as limitation on the disclosure.

The terms "first", "second", and the like used in the specification, the claims, and the accompany drawings of the disclosure are used to distinguish different objects rather than describe a particular order. In addition, the terms "include", "comprise", and "have" as well as variations thereof are intended to cover non-exclusive inclusion. For example, a process, method, system, product, or apparatus including a series of steps or units is not limited to the listed steps or units, instead, it can optionally include other steps or units that are not listed; optionally, other steps or units inherent to the process, method, product, or device can also be included.

The term "embodiment" or "implementation" referred to herein means that a particular feature, structure, or characteristic described in conjunction with the embodiment may be contained in at least one embodiment of the disclosure. The phrase appearing in various places in the specification does not necessarily refer to the same embodiment, nor does it refer to an independent or alternative embodiment that is mutually exclusive with other embodiments. It is explicitly and implicitly understood by those skilled in the art that an embodiment described herein may be combined with other embodiments.

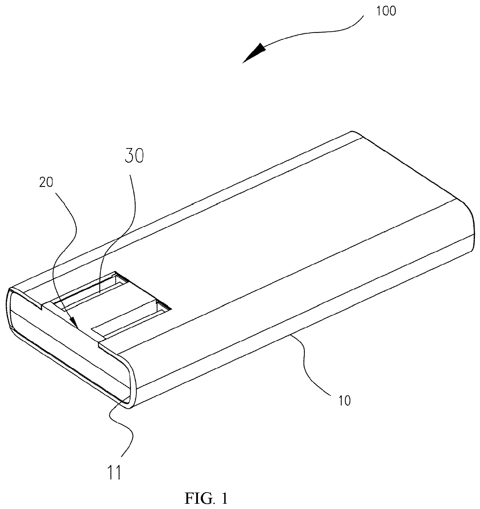

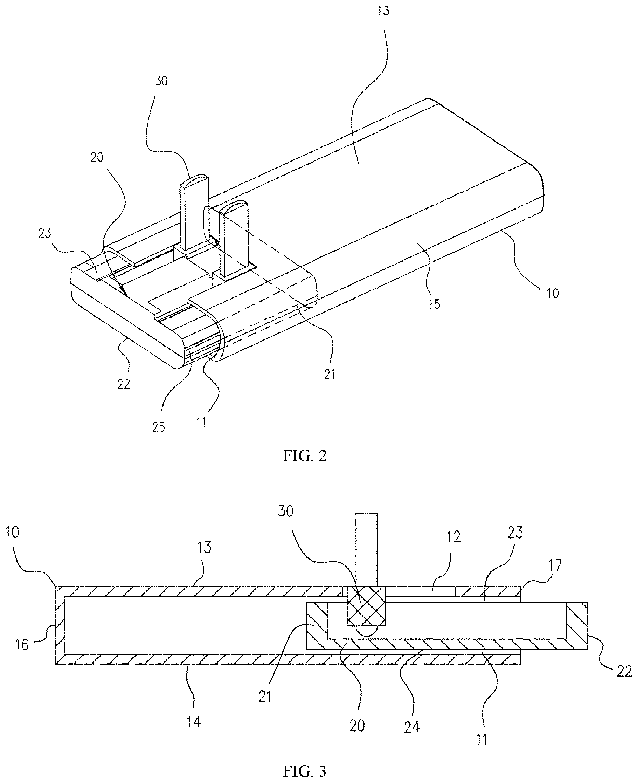

Referring to FIG. 1 and FIG. 2, the disclosure provides a power adapter 100. The power adapter 100 includes a housing 10, a push-pull holder 20, and a prong 30. The housing 10 defines an accommodating space 11. The push-pull holder 20 slidably fits the accommodating space 11. The prong 30 is movably connected with the push-pull holder 20. When the prong 30 slides along with the push-pull holder 20 to a first position, the prong 30 is closed relative to the push-pull holder 20 and accommodated in the accommodating space 11. When the prong 30 slides along with the push-pull holder 20 to a second position, the prong 30 is open relative to the push-pull holder 20, and an end of the prong 30 is away from the accommodating space 11.

It can be understood that, the prong 30 of the power adapter 100 can be plugged into a power socket, and thus the power adapter 100 can acquire electrical energy, thereby facilitating transfer of the electrical energy to an electronic device such as a mobile phone, a smart watch, a notebook computer, a tablet computer, or a smart headphone. The prong 30 of the power adapter 100 may be a prong 30 of various standards such as Chinese standard, European standard, American standard, British standard, Australian standard, Japanese standard, or Korean standard.

The push-pull holder 20 slidably fits the housing 10. The prong 30 is movably connected with the push-pull holder 20. When the prong 30 slides along with the push-pull holder 20 to the first position, the prong 30 is accommodated in the accommodating space 11. When the prong 30 slides along with the push-pull holder 20 to the second position, the end of the prong 30 is away from the accommodating space 11. As such, it is conducive to swiftness, convenience, labor saving, and safety in use of the power adapter 100.

In the implementations, the housing 10 can protect the push-pull holder 20 and the prong 30. The housing 10 is in a flat box shape, which is convenient for carrying the power adapter 100. The accommodating space 11 is defined by an inner surface of the housing 10. The inner surface of the housing 10 can guide sliding of the push-pull holder 20 such that the push-pull holder 20 can slide relative to the housing 10 smoothly, that is, an inner periphery of the housing 10 is in clearance fit with an outer periphery of the push-pull holder 20. The first position and the second position are respectively at two ends of the housing 10 in a longitudinal direction of the housing 10. In other implementations, the housing 10 may be in a rectangular column shape or in a cylindrical shape.

It can be understood that, in implementations of the disclosure, the first position and the second position are respectively two end positions of a sliding stroke of the push-pull holder 20. Specifically, for the first position of the housing 10, it can be understood that when the push-pull holder 20 slides to the first position, the prong 30 moves along with the push-pull holder 20 exactly to a state in which the prong 30 is fully accommodated in the accommodating space 11 and fully closed relative to the push-pull holder 20. For the second position of the housing 10, it can be understood that when the push-pull holder 20 slides to the second position, the prong 30 moves along with the push-pull holder 20 exactly to a state in which the end of the prong 30 fully extends out of the accommodating space 11 and the prong 30 is fully open relative to the push-pull holder 20. In implementations of the disclosure, when the push-pull holder 20 slides to the first position or the second position, the push-pull holder 20 may be fully or partially accommodated in the accommodating space 11, that is, there is no limitation on a fitting state between the push-pull holder 20 and the accommodating space 11 when the push-pull holder 20 is at the first position or the second position in the disclosure, as long as it can be ensured that when the push-pull holder 20 is at one end position (the first position) of the sliding stroke of the push-pull holder 20, the prong 30 is accommodated in the accommodating space 11 and closed relative to the push-pull holder 20; and when the push-pull holder 20 is at the other end position (the second position) of the sliding stroke of the push-pull holder 20, the end of the prong 30 is away from the accommodating space 11 and the prong 30 is open relative to the push-pull holder 20.

Referring to FIG. 2, FIG. 3, and FIG. 4, in the implementations, the push-pull holder 20 has a first end 21 and a second end 22 opposite the first end 21. The prong 30 is disposed at the first end 21 or the second end 22 or disposed between the first end 21 and the second end 22. The first end 21 is closer to the first position than the second end 22, and the second end 22 is closer to the second position than the first end 21. A direction in which the first end 21 is opposite to the second end 22 is parallel to a direction in which the first position is opposite to the second position. A distance between the first end 21 and the second end 22 may be smaller than a distance between the first position and the second position, or may be larger than the distance between the first position and the second position. The push-pull holder 20 drives the prong 30 to move relative to the housing 10, such that the prong 30 is wholly accommodated in the accommodating space 11 or wholly away from the accommodating space 11, or a portion of the prong 30 connected with the push-pull holder 20 is accommodated in the accommodating space and an end of the prong 30 away from the push-pull holder 20 is away from the accommodating space 11. When the push-pull holder 20 is at the first position, the prong 30 is closed relative to the push-pull holder 20, so that the prong 30 and the push-pull holder 20 can be in a compact structure, which is convenient for accommodating the prong 30 into the accommodating space 11 and thus conducive to protection of the prong 30 by the housing 10, thereby ensuring safety of the power adapter. When the push-pull holder 20 is at the second position, the prong 30 is open relative to the push-pull holder 20, such that the prong 30 is away from the accommodating space 11, and besides, the prong 30 can be supported by the push-pull holder 20 and thus can be plugged into the power socket stably. When the prong 30 is open relative to the push-pull holder 20, a longitudinal direction of the prong 30 is perpendicular to a sliding direction of the push-pull holder 20, where the longitudinal direction of the prong 30 is a direction in which the prong 30 is plugged into the power socket. The prong 30 may rotate relative to the push-pull holder 20 to be closed or open, or may slide relative to the push-pull holder 20 to be closed or open, or may rotate and slide relative to the push-pull holder 20 to be closed or open.

It can be understood that, in order to ensure that the prong 30 can move relative to the push-pull holder 20 frequently, structural components rotatably connected with the prong 30 have relatively high requirements on fatigue resistance. The prong 30 needs to be plugged into the power socket for acquiring electric energy, and therefore the prong 30 is often faced with the situation of arc burning caused by short circuit of a high-voltage circuit. Therefore, in order to ensure safety of the power adapter 100, the structural components that carry the prong 30 have relatively high requirements on fireproofing and anti-burning. Apparently, in implementations of the disclosure, the push-pull holder 20 carries the prong 30, and the push-pull holder 20 isolates the prong 30 from the housing 10. Compared with the housing 10, the push-pull holder 20 has better insulation protection performance, better abrasion and pressure resistance, and better fireproofing and anti-burning performance, thereby ensuring safety of the power adapter 100 and increasing a service life of the power adapter 100.

The prong 30 is movably connected with the push-pull holder 20, so that the housing 10 can be prevented from being plugged into the power socket, thereby avoiding scratches and damage to the housing 10 and thus ensuring appearance performance of the power adapter 100. Specifically, the housing 10 has a first end-surface 16, a second end-surface 17 opposite the first end-surface 16, and a front surface 13 connected between the first end-surface 16 and the second end-surface 17. The first position is close to the first end-surface 16, and the second position is close to the second end-surface 17. When the end of the prong 30 is away from the accommodating space 11, the end of the prong 30 exceeds the front surface 13. The housing 10 further has a rear surface 14 opposite the front surface 13, and first side-surfaces 15 connected between the front surface 13 and the rear surface 14. When the push-pull holder 20 moves to the first position, the prong 30 is between the front surface 13, the rear surface 14, the first side-surfaces 15, the first end-surface 16, and the second end-surface 17, thereby ensuring that the prong 30 can be fully accommodated in the accommodating space 11. When the push-pull holder 20 moves to the second position, the prong 30 may move to a side of the second end-surface 17 away from the first end-surface 16 and thus be away from the accommodating space 11, and the end of the prong 30 may exceed the front surface 13 after the prong 30 is open relative to the push-pull holder 20. Alternatively, the prong 30 may move to a side of the second end-surface 17 close to the first end-surface 16, and the end of the prong 30 may extend out from the front surface 13 to be away from the accommodating space 11, and thus the end of the prong 30 exceeds the front surface 13, which is convenient for plugging the end of the prong 30 into the power socket.

Optionally, the front surface 13 and the rear surface 14 each are a flat surface. A distance between the front surface 13 and the rear surface 14 is smaller than a distance between the two first side-surfaces 15, such that the housing 10 is flat and thus conducive to portability of the power adapter 100.

Optionally, the push-pull holder 20 is made of an insulating material. The housing 10 is a metal member, or an outer surface of the housing 10 is coated with a metal layer, so that the power adapter 100 is metalized in appearance, thereby improving appearance performance and ensuring safety.

Optionally, when the end of the prong 30 is away from the accommodating space 11, the prong exceeds the front surface 13, and the longitudinal direction of the prong 30 is perpendicular to the front surface 13.

Specifically, the push-pull holder 20 has a first surface 23, a second surface 24 opposite the first surface 23, and two second side-surfaces 25 that are connected between the first surface 23 and the second surface 24 and disposed opposite to each other. The first surface 23, the second surface 24, and the two second side-surfaces 25 form an outer periphery of the push-pull holder 20. The first surface 23 is close to the front surface 13, and the second surface 24 is close to the rear surface 14. The prong 30 is open or closed relative to the push-pull holder 20 from the first surface 23. One of the two second side-surfaces 25 may be at the left of the push-pull holder 20, and the other one of the two second side-surfaces 25 may be at the right of the push-pull holder 20. The first surface 23, the second surface 24, and the second side-surfaces 25 each are in clearance fit with the inner periphery of the housing 10, thereby ensuring that the push-pull holder 20 is slidable relative to the housing 10.

Optionally, the push-pull holder 20 includes a first casing 26 and a second casing 27 covered with the first casing 26. A portion of the prong 30 that is movably connected with the push-pull holder 20 is disposed between the first casing 26 and the second casing 27. The first surface 23 is a surface of the first casing 26 away from the second casing 27, and the second surface 24 is a surface of the second casing 27 away from the first casing 26. The prong 30 is partially clamped by the first casing 26 and the second casing 27, such that the prong 30 can move relative to the push-pull holder 20 smoothly and steadily. The side-surface 25 is formed after the first casing 26 and the second casing 27 are spliced together, that is, a half of the side-surface 25 is an edge of the first casing 26, and the other half of the side-surface 25 is an edge of the second casing 27. The first casing 26 is detachably connected with the second casing 27, which is convenient for detaching the prong 30 for maintenance, thereby increasing a service life of the power adapter 100.

It can be understood that, in the implementations, a driving force for driving the push-pull holder 20 to slide relative to the housing 10 may be a manual actuation force, that is, a user manually applies a force to the push-pull holder 20 and the housing 10 to make the push-pull holder 20 slide relative to the housing 10. The prong 30 may also be driven by a driving member to move relative to the push-pull holder 20 to be open, where the driving member is disposed at the push-pull holder 20. In other words, when the push-pull holder 20 slides to the second position, the prong 30 is subject to a driving force of the driving member to be open relative to the push-pull holder.

In a first implementation, the first end-surface 16 is closed, and the second end-surface 17 defines an opening 111 that communicates with the accommodating space 11. When the push-pull holder 20 slides to the first position, the push-pull holder 20 is accommodated in the accommodating space 11. When the push-pull holder 20 slides to the second position, the push-pull holder 20 partially extends out of the opening 111. During installation of the push-pull holder 20 into the housing 10, the push-pull holder 20 can be at least partially inserted into the accommodating space 11 through the opening 111, so that the push-pull holder 20 can slidably fit the housing 10. The first end 21 is always inserted into the housing 10 and fits the housing 10, and the second end 22 can retract into or extend out of the housing 10. During a process that the push-pull holder 20 moves to a position where the second end 22 extends out of the opening 111 and finally moves to the second position, the prong 30 moves along with the push-pull holder 20 to be open relative to the push-pull holder 20, and finally to a position where the end of the prong 30 is away from the push-pull holder 20, and at this point, the end of the prong 30 is away from the accommodating space 11, such that the end of the prong 30 can be plugged into the power socket. During a process that the push-pull holder 20 moves to a position where the second end 22 retracts into the opening 111 and finally moves to the first position, the prong 30 moves along with the push-pull holder 20 to a position where the prong 30 is accommodated in the accommodating space 11, and at this point, the prong 30 is limited by the housing 10 and thus cannot further move relative to the push-pull holder 20, so that the power adapter 100 can be in a compact structure when the prong 30 is accommodated in the housing 10. As such, the power adapter 100 can be smaller in size and thus it is convenient for carrying the power adapter 100, and on the other hand, the prong 30 can be protected by the housing 10. It can be understood that, to cause the prong 30 to be accommodated in or move away from the accommodating space 11, it is only required to drive the push-pull holder 20 to slide relative to the housing 10 without the prong 30 being touched because the push-pull holder 20 is in linkage with the prong 30, which avoids damage to the prong 30, thereby ensuring safety of the prong 30. It can be understood that, movement of the prong 30 relative to the push-pull holder 20 may take place concurrently with sliding of the push-pull holder 10 relative to the housing 10, or may take place after sliding of the push-pull holder 10 relative to the housing.

Optionally, the opening 111 is rectangular. In other words, a space where the push-pull holder 20 slidably fits the accommodating space 11 is rectangular, which is conducive to limiting the push-pull holder 10, thereby preventing the push-pull holder 20 from rotating relative to the housing 10.

In the first implementation, the front surface 13 defines a through hole 12 that communicates with the opening 111 and the accommodating space 11. When the push-pull holder 20 slides to the second position, the end of the prong 30 is away from the accommodating space 11 through the through hole 12. The through hole 12 is defined at a position on the front surface 13 connected with the second end-surface 17, and the through hole 12 communicates with the opening 111. The through hole 12 is defined on the front surface 13, and as such, during pulling of the push-pull holder 20 out of the accommodating space 11 through the opening 111, the push-pull holder 20 does not need to drive the prong 30 to be fully out of the accommodating space 12, and only needs to drive the prong 30 to a position facing the through hole 12, and at this point, the end of the prong 30 can extend out of the through hole 12 and finally is away from the accommodating space 11, that is, the push-pull holder 20 slides to the second position. When the end of the prong 30 is away from the accommodating space 11, by pushing the push-pull holder 20 to retract into the accommodating space 11, the prong 30 can begin to move relative to the push-pull holder 20 to be closed and be gradually staggered from the through hole 11 following sliding of the push-pull holder 20, and finally, sliding of the prong 30 is limited due to resistance of the housing 10, and at this point, the second end 22 of the push-pull holder 20 covers the opening 111, that is, the push-pull holder 20 slides to the first position. When the push-pull holder 20 slides to the first position, the push-pull holder 20 can be accommodated in the accommodating space 11, and an end-surface of the second end 22 is flush with the second end-surface 17, thereby ensuring flatness of the power adapter 100 in appearance. In other implementations, when the push-pull holder 20 slides to the first position, a portion of the second end 22 of the push-pull holder 20 may extend out of the accommodating space through the opening 111, which is convenient for subsequent application of a pulling force to the portion of the push-pull holder 20 that extends out of the opening 111 and thus convenient for pulling the push-pull holder 20 to slide relative to the housing 10.

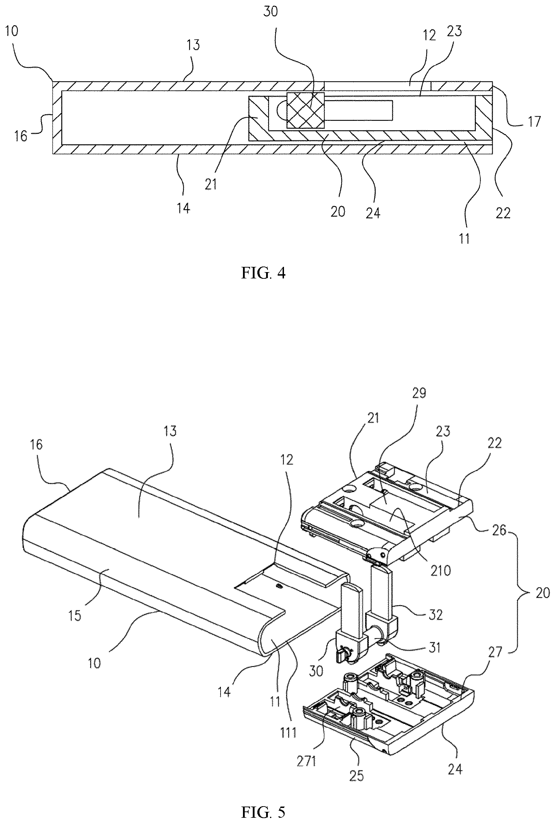

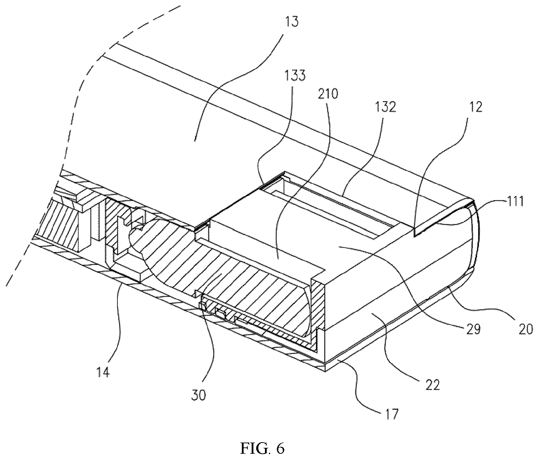

Referring to FIG. 5 and FIG. 6, in the first implementation, the push-pull holder 20 is provided with a boss 29 that fits the through hole 12. When the push-pull holder 20 slides to the first position, the boss 29 abuts against an inner wall of the through hole 12 away from the opening 111 to limit the push-pull holder 20.

Specifically, referring to FIG. 6, FIG. 7, and the FIG. 8, the front surface 13 has two inner edges 132 that are connected with the second end-surface 17 and an abutting edge 133 that is connected with the two inner edges 132 and opposite to the second end-surface 17. The through hole 12 is defined between the second end-surface 17, the two inner edges 132, and the abutting edge 133.

When the push-pull holder 20 drives the prong 30 to be accommodated in the accommodating space 11, that is, the push-pull holder 20 slides to the first position, the boss 29 abuts against the abutting edge 133 to limit insertion of the push-pull holder 20 into the accommodating space 11, which avoids excessive insertion of the push-pull holder 20 into the accommodating space 11, and thus it is convenient for pulling the push-pull holder 20 out of the accommodating space 11 next time.

When the push-pull holder 20 drives the end of the prong 30 to be away from the accommodating space 11, that is, the push-pull holder 20 slides to the second position, the boss 29 partially fits the through hole 12, and the through hole 12 can be partially filled by the boss 29, which can prevent impurities from entering the through hole 12 and ensure flatness of the power adapter 100 in appearance. When the push-pull holder 20 slides to the first position, a side-surface of the boss 29 close to the first end 21 can abut against the abutting edge 133, which is possible to prevent excessive insertion of the push-pull holder 20 into the opening 111, thereby avoiding difficulty in pulling the push-pull holder 20 next time. The two inner edges 132 can slidably fit two sidewalls of the boss 29, which can guide sliding of the push-pull holder 20.

Optionally, a top surface of the boss 29 may be flush with the front surface 13, thereby ensuring flatness of the power adapter 100 in appearance. A certain assembly step is allowed to exist between the top surface of the boss 29 and the front surface 13, and as such, it is possible to ensure that the top surface of the boss 29 always has priority over the front surface 13 to contact the power socket, thereby avoiding damage to the outer surface of the housing 10.

Optionally, the top surface of the boss 29 exceeds the front surface 13, so that when the prong 30 is plugged into the power socket, a certain gap always exists between the housing 10 and the power socket, thereby ensuring safety of the housing 10.

It can be understood that, when the push-pull holder 20 slides to the second position, the prong 30 is not further limited by the housing 10. The prong 30 can receive a driving force and begin to move relative to the push-pull holder 20 to be open, and finally the end of the prong 30 extends out of the through hole 12 and the portion of the prong 30 connected with the push-pull holder 20 is close to the abutting edge 133. When the prong 30 needs to be accommodated in the accommodating space 11, the push-pull holder 20 can be pushed to slide towards the first end-surface 16. The abutting edge 133 abuts against a periphery of the prong 30, so that the prong 30 is forced to move relative to the push-pull holder 20 to be closed and gradually retract into the accommodating space 11, and finally, the prong 30 moves relative to the push-pull holder 20 to be closed and retracts into the accommodating space 11.

Referring to FIG. 5 and FIG. 6, in the first implementation, the prong 30 can rotate relative to the push-pull holder 20 to be open or closed, that is, the prong 30 is rotatably connected with the push-pull holder 20.

Specifically, the push-pull holder 20 further defines accommodating grooves 210 respectively located at two sides of the boss 29. The prong 30 is provided with a rotating shaft 31 and two pin posts 32 fixed at the rotating shaft 31. The rotating shaft 31 is rotatably connected with the push-pull holder 20 and penetrates through the two accommodating grooves 210. An axial direction of the rotating shaft 31 is perpendicular to the sliding direction of the push-pull holder 20. The two pin posts 32 are rotatable along with the rotating shaft 31, and each of the two pin posts 32 is flippable to extend out of or be accommodated in one of the two accommodating grooves 210. The rotating shaft 31 is clamped by the first casing 26 and the second casing 27, so that the prong 30 can rotate relative to the push-pull holder 20 effectively.

In the implementations, the boss 29 is in a T-shaped structure. A portion of the boss 29 perpendicular to the sliding direction of the push-pull holder 20 is close to the second end 22 of the push-pull holder 20, and a portion of the boss 29 parallel to the sliding direction of the push-pull holder 20 is located between the two accommodating grooves 210. When the prong 30 is rotated out of the push-pull holder 20 and the housing 10, an end of the prong 30 rotatably connected with the push-pull holder 20 is in the accommodating groove 210, and the other end of the prong 30 is outside the accommodating groove 210. When the pin posts 32 are accommodated in the accommodating grooves 210, the prong 30 is closed relative to the push-pull holder 20, and besides, the prong 30 can be hidden and protected by the push-pull holder 20 and the size of the power adapter 100 (see FIG. 1) can be reduced to facilitate portability.

Specifically, a longitudinal direction of the pin post 32 is perpendicular to a longitudinal direction of the rotating shaft 31. A central axis of the pin post 32 intersects with a central axis of the rotating shaft 31. The two pin posts 32 are arranged in parallel in an axial direction of the rotating shaft 31. The rotating shaft 31 is always partially located in the accommodating groove 210. The rotating shaft 31 is in the accommodating groove 210 at a position away from the first end-surface, so that an end of the pin post 32 away from the rotating shaft 31 can be flipped to extend out of the accommodating groove 210. When the prong 30 is closed relative to the push-pull holder 20, the prong 30 is limited by a bottom wall of the accommodating groove 210, to avoid excessive retraction of the prong 30 to the push-pull holder 20. When the prong 30 is open relative to the push-pull holder 20, the prong 30 is limited by a sidewall of the accommodating groove 210 adjacent to the rotating shaft 31, so as to avoid excessive flipping of the prong 30 relative to the push-pull holder 20, and thus it is conducive to plugging the prong 30 into the power socket. The two pin posts 32 are respectively accommodated in the two accommodating grooves 210, so that the push-pull holder 20 can be stable and on the other hand, the two pin posts 32 can be insulated effectively to avoid short circuit of the pin posts 32. The pin post 32 is a metal member, so that current can be acquired via the prong 30.

In the first implementation, the first casing 26 is provided with bearing bosses at a side of the first casing 26 facing the second casing 27, where the bearing boss corresponds to the accommodating groove 210. The second casing 27 is provided with bearing protrusions 271 at a side of the second casing 27 facing the first casing 26, where the bearing protrusion 271 fits the bearing boss. The bearing boss defines a first U-shaped groove, and the bearing protrusion 271 defines a second U-shaped groove. The first U-shaped groove and the second U-shaped groove cooperatively carry the rotating shaft 31 of the prong 30, so that the prong 30 can be flipped relative to the push-pull holder 20. The first U-shaped groove communicates with an inner space of the push-pull holder 20 and the accommodating groove 210. The bearing boss defines two first U-shaped grooves respectively on two sidewalls of the bearing boss, so that the rotating shaft 31 can pass through the accommodating groove 210 through the first U-shaped groove, and the pin post 32 is fixed to a portion of the rotating shaft 31 passing through the accommodating groove 210. The second casing 27 is provided with four bearing protrusions 271 corresponding to four second U-shaped grooves, so as to improve structural stability of the rotating shaft 31 relative to the push-pull holder 20, ensure smooth rotation of the rotating shaft 31 relative to the push-pull holder 20, and effectively isolate the two pin posts 22.

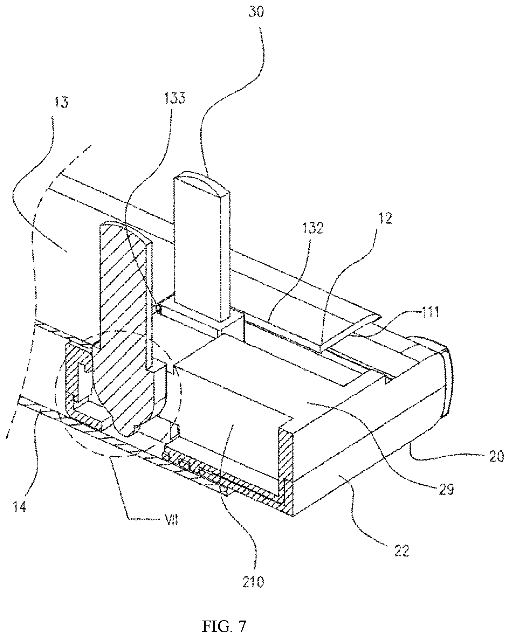

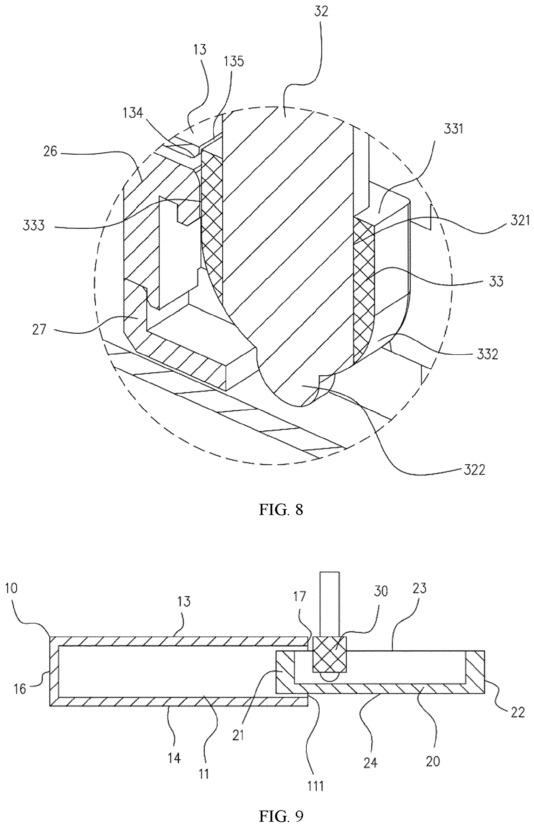

Referring to FIG. 7 and FIG. 8, the pin post 32 has a root portion 321 that is fixedly connected with the rotating shaft 31. The prong 30 is further provided with an insulating block 33 wrapped on a periphery of the root portion 321. When the push-pull holder 20 is inserted and slides towards the end plate 16, the abutting edge 133 abuts against the insulating block 33 and pushes the insulating block 33 to rotate into the accommodating groove 210, so as to push the pin into the accommodating groove 210. In other words, when the push-pull holder 20 slides from the second position to the first position, the housing 10 abuts against the insulating block 33 and pushes the insulating block 33 to rotate into the accommodating groove 210, so as to push the pin post 32 into the accommodating groove 210. It can be understood that, the abutting edge 133 is a portion of the housing 10 that can abut against the insulating block 33.

The insulating block 33 wraps both the root portion 321 and a portion of the rotating shaft 31 that is connected with the root portion 321. The insulating block 33 has a flat end-surface 331 perpendicular to the longitudinal direction of the pin post 32 and an arc end-surface 332 opposite the flat end-surface 331. The pin post 32 penetrates the flat end-surface 331. When the pin post 32 has been rotated out of the accommodating groove 210, the flat end-surface 331 is substantially flush with the top surface of the boss 29. The arc end-surface 332 is a circular-arc cylindrical surface. A central axis of the arc end-surface 332 coincides with the central axis of the rotating shaft 31. The insulating block 33 further has an abutting side-surface 333 that is connected with the flat end-surface 331 and the arc end-surface 332. The abutting side-surface 333 is perpendicular to the flat end-surface 331 and tangent with the arc end-surface 332. The abutting side-surface 333 is at a side of the insulating block 33 adjacent to the abutting edge 133. When the end of the prong 30 is away from the accommodating space 11, the abutting side-surface 333 is close to the abutting edge 133. When an end of the pin post 32 has been rotated out of the accommodating groove 210, and the push-pull holder 20 is subject to a driving force to slide relative to the housing 10 towards the first position, the abutting edge 133 begins to abut against the abutting side-surface 333, so that the insulating block 33 is subject to a sliding resisting force of the housing 10. Under the sliding resisting force of the housing 10, the insulating block 33 begins to drive the pin post 32 to rotate into the accommodating groove 210. The abutting side-surface 333 slidably fits the abutting edge 133 and gradually slides into the accommodating space 11, so that the pin post 32 is finally accommodated in the accommodating groove 210, and at this point, the pin post 32 is moved to be in the accommodating space 11. The pin post 32 is partially staggered from the position facing the through hole 12, so that the prong 30 can be rotated out of the accommodating groove 210 when the push-pull holder 20 is driven to slide relative to the housing 10 next time. In other implementations, the insulating block 33 may be in a cylindrical shape, the arc end-surface 332 may be an arc spherical surface, and the abutting side-surface 333 may be a circular cylindrical surface.

In the first implementation, the housing 10 has a chamfered surface 134 at the abutting edge 133. When the push-pull holder 20 slides to the second position, the chamfered surface 134 slidably fits the abutting side-surface 333 of the insulating block 33.

In the implementations, the housing 10 has a through-hole inner side-surface 135 that is connected with the front surface 13. The through-hole inner side-surface 135 is opposite to the second end-surface 17. The through-hole inner side-surface 135 is a surface of the abutting edge 133. The chamfered surface 134 is between the through-hole inner side-surface 135 and the inner surface of the housing 10. When the push-pull holder 20 slides to the second position, the chamfered surface 134 contacts the abutting side-surface 333 and is tangent with the abutting side-surface 333, and the abutting side-surface 333 slides and rotates relative to the chamfered surface 134. The chamfered surface 134 fits the abutting side-surface 333, so that a sliding resisting force of the housing 10 to the insulating block 33 can be reduced, thereby ensuring smoothness when the housing 10 pushes the insulating block 33 to rotate relative to the push-pull holder 20 to be closed, that is, ensuring smooth rotation of the prong 30 into the accommodating groove 210. Optionally, the chamfered surface 134 is an arc surface, and is tangent with the through-hole inner side-surface 135 and the inner surface of the housing 10. In other implementations, the through-hole inner side-surface 135 is an arc surface, and is tangent with the outer surface of the housing 10 and the inner surface of the housing 10. The chamfered surface 134 is at a position where the through-hole inner side-surface 135 is connected with the inner surface of the housing 10. When the push-pull holder 20 slides towards the end plate 16, the through-hole inner side-surface 135 slidably fits the side-surface 25 of the insulating block 33.

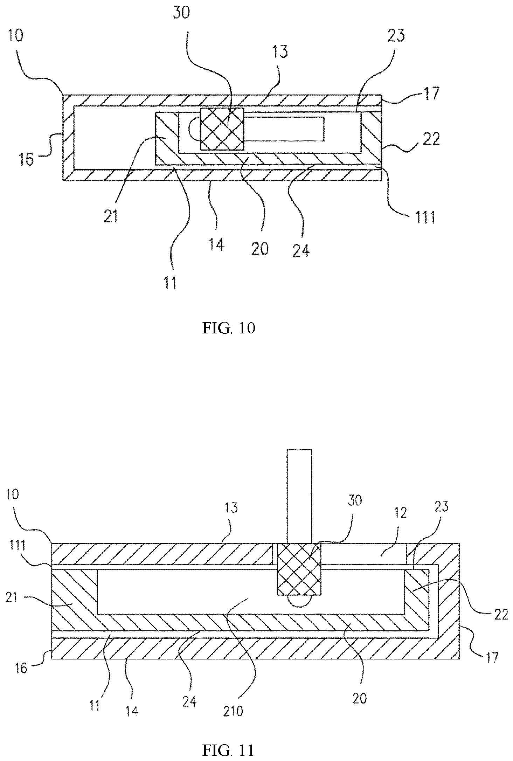

Referring to FIG. 9 and FIG. 10, a second implementation is provided. The second implementation is substantially the same as the first implementation, except that when the push-pull holder 20 slides to the second position, the push-pull holder 20 drives the end of the prong 30 to be away from the accommodating space 11 through the opening 111.

Specifically, when the push-pull holder 20 slides to the second position, the prong 30 is fully pulled out of the accommodating space 11, such that the prong 30 is fully outside the accommodating space 11 and thus is not further limited by the housing 10. The prong 30 can receive a driving force and move relative to the push-pull holder 20 to be open, and at this point, the end of the prong 30 exceeds the front surface 13, which facilitates plugging the prong 30 into the power socket. When the push-pull holder 20 slides to the first position, the push-pull holder 20 drives the prong 30 to enter into the accommodating space 11 through the opening 111, such that the prong 30 is at least partially accommodated in the accommodating space 11 and thus is limited by the housing 10, and at this point, the prong 30 cannot be open relative to the push-pull holder 20 and thus is kept closed relative to the push-pull holder 20, and as such, the power adapter 100 can be in a compact structure, which facilitates portability of the power adapter 100.

It can be understood that, the prong 30 extends out from the opening 111 and moves relative to the push-pull holder 20 to be open, such that the housing 10 can have a complete structure, and the front surface 13 is consistent with the rear surface 14, thereby ensuring structural performance of the housing 10 in appearance.

More specifically, in order to facilitate insertion of the push-pull holder 20 into the accommodating space 11 and ensure that the front surface 13 is consistent with the rear surface 14, the first surface 23 and the second surface 24 are both set to be flat, thereby ensuring that the first surface 23 and the second surface 24 can slidably fit the inner surface of the housing 10.

In order for the housing 10 to push the prong 30 to rotate relative to the push-pull holder 20 to be closed, the first end-surface is provided with the chamfered surface 134 at an edge of the first end-surface close to the opening 111. The chamfered surface 134 is close to the front surface, so that it is easy for the chamfered surface 134 to contact the abutting side-surface 333. As such, by applying a driving force to the push-pull holder 20 for moving the push-pull holder 20 from the second position to the first position, the housing 10 can apply a pushing force to the prong 30 in a direction from the first end to the second end, so that the prong 30 can rotate relative to the push-pull holder 20 to be closed.

It can be understood that, in order for the housing 10 to push the prong 30 to be closed relative to the push-pull holder 20, a distance exists between the portion of the prong 30 connected with the push-pull holder 20 and the second end 22 of the push-pull holder 20, such that the prong 30 closed can be accommodated in a space defined by the distance. If the prong 30 is able to be closed relative to the push-pull holder 20 without aid of a pushing force of the housing 10, the portion of the prong 30 connected with the push-pull holder 20 may also be at a position close to the second end 22.

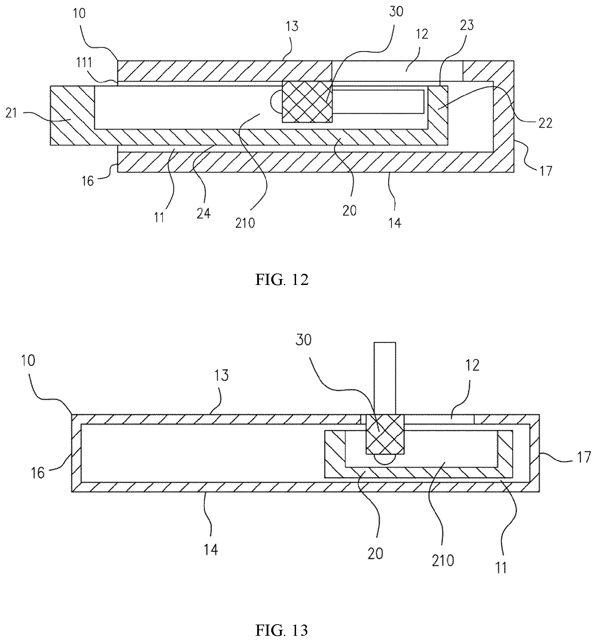

Referring to FIG. 11 and FIG. 12, a third implementation is provided. The third implementation is substantially the same as the first implementation, except that the first end-surface 16 defines the opening 111 that communicates with the accommodating space 11, the second end-surface 17 is closed, and the front surface 13 defines the through hole 12 that communicates with the accommodating space 11 and is close to the second end-surface 17; when the push-pull holder 20 slides to the first position, the push-pull holder 20 partially extends out of the opening 111; and when the push-pull holder 20 slides to the second position, the push-pull holder 20 is accommodated in the accommodating space 11.

Specifically, the prong 30 is movably connected with the second end 22. When the push-pull holder 20 slides to the second position, the second end 22 is close to the second end-surface 17, the prong 30 faces the through hole 12 and is open relative to the push-pull holder 20, and the end of the prong 30 extends out of the through hole 12, so that the end of the prong 30 exceeds the front surface 12. When the push-pull holder 20 slides to the first position, the second end 22 is staggered from the through hole 12, so that the prong 30 is at least partially staggered from the through hole 12 and is at least partially limited by the housing 10, such that the prong 30 cannot move relative to the push-pull holder 20 and thus is kept closed relative to the push-pull holder 20, and at this point, the first end 21 of the push-pull holder 20 extends out of the opening 111. Since the first end 21 extends out of the opening 111, it is convenient for pressing the first end 21 next time to drive the push-pull holder 20 to slide towards the second end-surface 17, so that the push-pull holder 20 slides to the second position and thus the end of the prong 30 is away from the accommodating space 11. When the prong 30 needs to be accommodated in the accommodating space 11, a pulling force away from the second end-surface 17 can be applied to the push-pull holder 20, so that the prong 30 can move away from the second end-surface 17 and gradually retract into the accommodating space 11 from the through hole 12 to be closed relative to the push-pull holder 20.

Optionally, in order to fully utilize a space inside the push-pull holder 20, components such as a circuit board, a transformer, and electronic components can be accommodated in a space defined between the prong 30 and a position of the accommodating groove 210 close to the first end 21, such that the power adapter 100 can have a compact structure, and it is conducive to electrical connection between the prong 30 and components such as the circuit board, the transformer, and the electronic components.

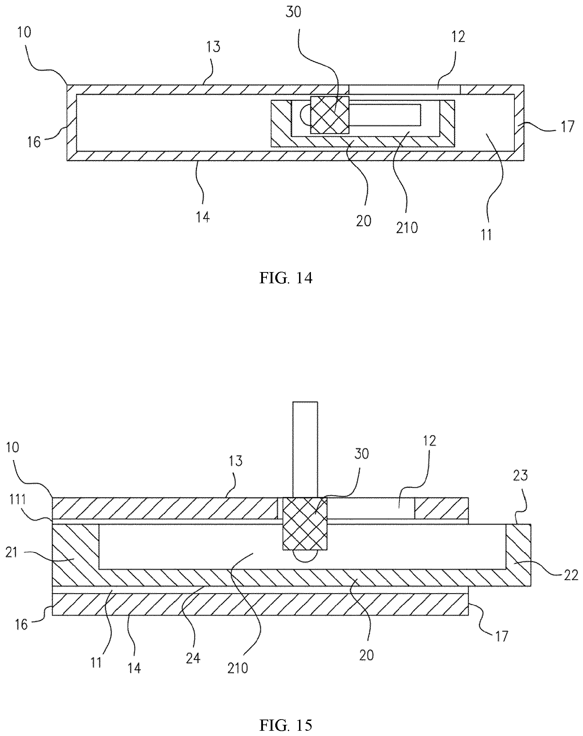

Referring to FIG. 13 and FIG. 14, a fourth implementation is provided. The fourth implementation is substantially the same as the third implementation, except that the first end-surface 16 and the second end-surface 17 are both closed, the push-pull holder 20 is always accommodated in the accommodating space 11, and the front surface 13 defines the through hole 12 that is close to the second end-surface 17; and when the push-pull holder 20 slides to the second position, the end of the prong 30 is away from the accommodating space 11 through the through hole 12.

Specifically, the push-pull holder 20 can slide back and forth between the first end-surface 16 and the second end-surface 17, and the prong 30 is movably connected with the second end 22. When the push-pull holder 20 slides to the first position, the first end 21 is close to the first end-surface 16, a gap exists between the second end 22 and the second end-surface 17, the second end 22 is staggered from the through hole 12, and the prong 30 is staggered from the through hole 12, so that the prong 30 is limited by the housing 10 and thus is kept closed relative to the push-pull holder 20 and accommodated in the accommodating space 11. When the push-pull holder 20 slides to the second position, the second end 22 is close to the second end-surface 17, the prong 30 faces the through hole 12, the end of the prong 30 extends out of the through hole 12 and is away from the accommodating space 11, and a gap exists between the first end 21 and the first end-surface 16. The first end-surface 16 and the second end-surface 17 are both closed, so that a relatively large portion of the push-pull holder 20 is always accommodated in the accommodating space 11, thereby ensuring safety of the push-pull holder 20. The push-pull holder 20 may be provided with a push-pull structure that partially extends out of the first side-surface 15 (see FIG. 2), the front surface 13, or the rear surface 14, which is convenient for the push-pull holder 20 to receive a driving force via the push-pull structure to slide relative to the housing 10. Certainly, a driving mechanism may be disposed in the accommodating space and used for directly driving the push-pull holder to slide relative to the housing.

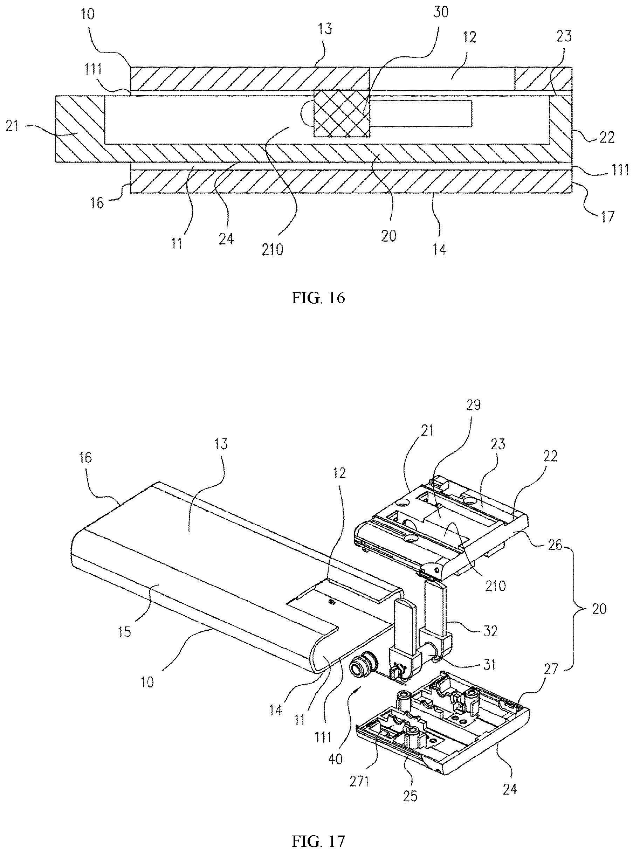

Referring to FIG. 15 and FIG. 16, a fifth implementation is provided. The fifth implementation is substantially the same as the second implementation, except that the first end-surface 16 and the second end-surface 17 each define the opening 111 that communicates with the accommodating space 11; when the push-pull holder 20 slides to the first position, the push-pull holder 20 partially extends out of the opening of the first end-surface 16; and when the push-pull holder 20 slides to the second position, the push-pull holder 20 partially extends out of the opening of the second end-surface 17.

Specifically, the push-pull holder 20 always partially extends out of the accommodating space through the opening 111. When the push-pull holder 20 slides to the first position, the first end 21 extends out of the opening of the first end-surface 16, the second end 22 is accommodated in the accommodating space 11, and the prong 30 is accommodated in the accommodating space 11 and close to the second end-surface 17. The first end 21 extends out of the opening 111 of the first end-surface 16, which is convenient for the push-pull holder 20 to receive a pushing force to slide towards the second end-surface 17. When the push-pull holder 20 slides to the second position, the second end 22 extends out of the opening 111 of the second end-surface 17, the prong 30 is away from the accommodating space 11 through the opening 111, the end of the prong 30 exceeds the front surface 13, and the first end 21 is accommodated in the accommodating space 11. The first end-surface 16 and the second end-surface 17 each define the opening 111, so that the push-pull holder 20 always partially extends out of the opening 111, which is convenient for a portion of the push-pull holder 20 extending out of the opening 111 to receive a driving force to slide relative to the housing 10, thereby preventing the push-pull holder 20 from extending out of the accommodating space 11 from the front surface 13, the rear surface 14, or the first side-surface 15 and thus ensuring completeness of the front surface 13, the rear surface 14, and the first side-surface 15 in appearance.

Further, referring to FIG. 17, the power adapter 100 further includes a power assembly 40. The power assembly 40 is accommodated in the accommodating space 11 and connected with the prong 30 and the push-pull holder 20, and configured to drive the prong 30 to move relative to the push-pull holder 20.

In the implementations, the power assembly 40 is always accommodated in the housing 10. The power assembly 40 may be used for driving the prong 30 to be open relative to the push-pull holder 20, and other components may be used for driving the prong 30 to be closed relative to the push-pull holder 20. The power assembly 40 may not only be used for driving the prong 30 to be open relative to the push-pull holder 20, but also driving the prong 30 to be closed relative to the push-pull holder 20. The power assembly 40 may also be used only for driving the prong 30 to be closed relative to the push-pull holder 20, and other components are used for driving the prong 30 to be open relative to the push-pull holder 20. The power assembly 40 may drive the prong 30 to rotate relative to the push-pull holder 20, or may drive the prong 30 to slide relative to the push-pull holder 20, or may drive the prong 30 to rotate and slide relative to the push-pull holder 20. For the power adapter 100 of the disclosure, there is no limitation on the manner in which the power assembly 40 drives the prong 30 to move relative to the push-pull holder 20.

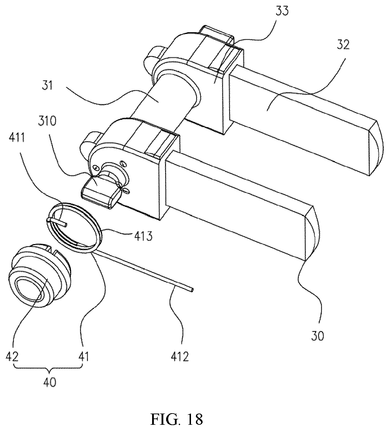

Referring to FIG. 17 and FIG. 18, in the first implementation, the power assembly 40 can consistently provide a rotation torque to the prong 30, to rotate the prong 30 to be open relative to the push-pull holder.

Specifically, the power assembly 40 can provide a driving torque to the prong 30, so that the prong 30 can flip relative to the push-pull holder 20 to be in an open state. The power assembly 40 may consistently provide a torque to the prong 30. When the push-pull holder 20 moves to the second position, the prong 30 moves along with the push-pull holder 20 to the position facing the through hole 12, so that a torque received by the prong 30 from the power assembly 40 can be released, and thus the prong 30 can rotate relative to the push-pull holder 20 to be open and finally reach a state in which the end of the prong 30 is away from the accommodating hole 11. When the prong 30 needs to be accommodated in the accommodating space 11, the push-pull holder 20 can be pushed to slide towards the first position, such that the chamfered surface 134 of the housing 10 contacts the prong 30 and forces the prong 30 to be closed relative to the push-pull holder 20 and gradually retract to the accommodating space 11, and finally, the prong 30 moves to a position where the prong 30 is limited by the housing 10, and thus cannot release a rotation torque and is kept in a stationary state relative to the push-pull holder 20, that is, the prong 30 is closed relative to the push-pull holder 20 under a resisting force of the housing 10.

Optionally, the power assembly 40 is provided with a torsion spring 41. The torsion spring 41 has one end fixedly connected with the prong 30 and the other end fixedly connected with the push-pull holder 20, so as to provide a torque for the prong 30 to rotate relative to the push-pull holder 20 to be open.

The torsion spring 41 has a first fixing end 411, a second fixing end 412 opposite the first fixing end 411, and a curved arm 413 connected between the first fixing end 411 and the second fixing end 412. The first fixing end 411 is fixedly connected with the prong 30, and the second fixing end 412 is fixed inside the second casing 27 and abuts against the second casing 27. The second fixing end 412 is disposed in an elastic-sheet slot 262. The curved arm 413 is wound around a periphery of the rotating shaft 31. The curved arm 413 is configured to provide an elastic force for driving the first fixing end 411 to be open relative to the second fixing end 412. When the housing 10 pushes the prong 30 to rotate into the accommodating space 11, the curved arm 413 receives a torsion force and thus is deformed, the torsion spring 41 begins to store driving energy, and the first fixing end 411 of the torsion spring 41 is closed relative to the second fixing end 412 of the torsion spring 41. When the push-pull holder 20 drives the prong 30 to slide to the position facing the through hole 12, the prong 30 is not limited by the housing 10, and the torsion spring 41 releases the driving energy to the prong 30, so that the prong 30 rotates relative to the push-pull holder 20 and extends out of the accommodating space 11.

Specifically, the power assembly 40 is further provided with a shaft sleeve 42 that is fixedly connected with the prong 30. The torsion spring 41 is sleeved on the shaft sleeve 42, and has one end fixed on a periphery of the shaft sleeve 42 and the other end fixed at the push-pull holder 20. The shaft sleeve 42 is sleeved on an end of the rotating shaft 31. Optionally, the end of the rotating shaft 31 is provided with a flat pin 310, where the flat pin 310 extends along an axial direction of the rotating shaft 31. The shaft sleeve 42 defines a flat insertion hole, where the flat insertion hole extends inside the shaft sleeve 42 along an axial direction of the shaft sleeve 42. The flat pin 310 fits the flat insertion hole to prevent the shaft sleeve 42 from rotating relative to the rotating shaft 31, which is conducive to stability of the shaft sleeve 42 relative to the rotating shaft 31. The shaft sleeve 42 defines a pinhole at a periphery of the shaft sleeve 42, the first fixing end 411 is inserted into the pinhole, and the curved arm 413 is wound around the periphery of the shaft sleeve 42, so that the first fixing end 411 is fixed to the rotating shaft 31. The shaft sleeve 42 is detachably connected with the rotating shaft 31, and as such, the power assembly 40 and the prong 30 can be detached for maintenance, which is beneficial to increasing a service life of the power adapter 100.

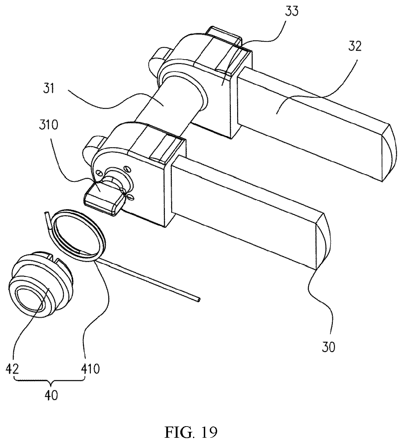

Referring to FIG. 19, a sixth implementation is provided. The sixth implementation is substantially the same as the first implementation, except that the power assembly 40 can consistently provide a rotation torque to the prong 30, so that the prong 30 can rotate relative to the push-pull holder 20 to be closed. When the push-pull holder 20 slides to the first position, the power assembly 40 drives the prong 30 to be closed relative to the push-pull holder 20, and the prong 30 gradually retracts into the accommodating space 11. When the end of the prong 30 is required to move away from the accommodating space 11, the push-pull holder 20 is driven to slide relative to the housing 10 to the second position, and the abutting edge of the housing 20 abuts against the prong 30, so that the prong 30 rotates relative to the push-pull holder 20 to be open, and finally the end of the prong 30 extends out of the through hole 12 and is away from the accommodating space 11.

Optionally, the power assembly 40 is provided with a closed torsion spring 410. The closed torsion spring 410 has one end fixedly connected with the prong 30 and the other end fixedly connected with the push-pull holder 20, and is configured to drive the prong 30 to be closed relative to the push-pull holder 20. As illustrated in FIG. 19, when the prong 30 is open relative to the push-pull holder 20, the two ends of the closed torsion spring 410 are elastically open, so that the prong 30 is subject to a driving force for driving the prong 30 to be closed relative to the push-pull holder 20, and when the prong 30 is not limited by the housing, the prong 30 begins to rotate relative to the push-pull holder 20 to be closed due to an elastic force of the closed torsion spring 410.

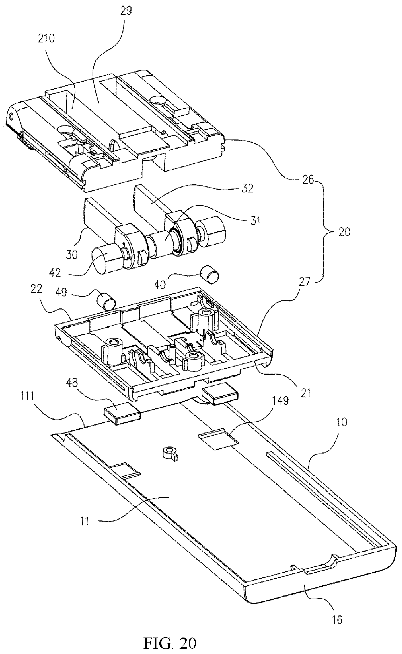

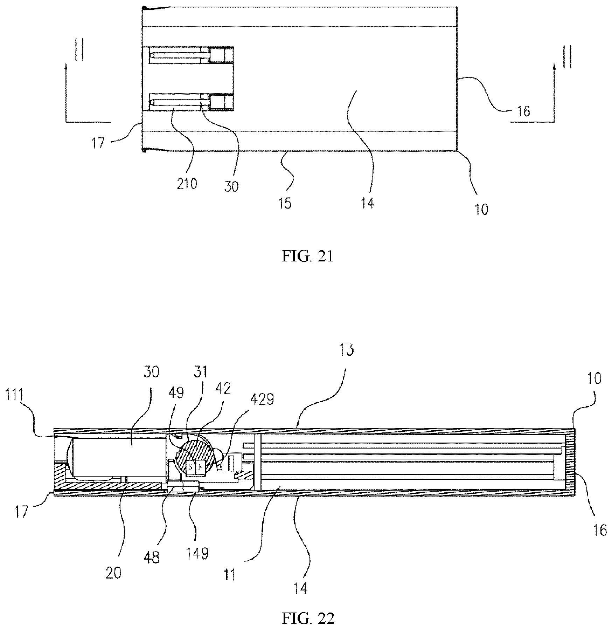

Referring to FIG. 20 and FIG. 21, a seventh implementation is provided. The seventh implementation is substantially the same as the first implementation, except that the power assembly 40 can not only drive the prong 30 to rotate relative to the push-pull holder 20 to be open, but also drive the prong 30 to rotate relative to the push-pull holder 20 to be closed. During sliding of the push-pull holder 30 from the second position to the first position, the power assembly 40 drives the prong 30 to rotate relative to the push-pull holder 20 to be closed. During sliding of the push-pull holder 30 from the first position to the second position, the power assembly 40 drives the prong 30 to rotate relative to the push-pull holder 20 to be open.

Specifically, referring to FIG. 22, FIG. 23, and FIG. 24, the power assembly 40 is provided with a first magnetic member 49 fixedly connected with the prong 30 and a second magnetic member 48 fixedly connected with the housing. When the push-pull holder 20 slides to the second position, the first magnetic member 49 and the second magnetic member 48 cooperate with each other through magnetic repulsion to drive the prong 30 to rotate relative to the push-pull holder 20 to be open, and at this point, the end of the prong 30 is away from the accommodating space 11. When the push-pull holder 20 slides to the first position, the first magnetic member 49 and the second magnetic member 48 cooperate with each other through magnetic attraction to drive the prong 30 to rotate relative to the push-pull holder 20 to be closed.

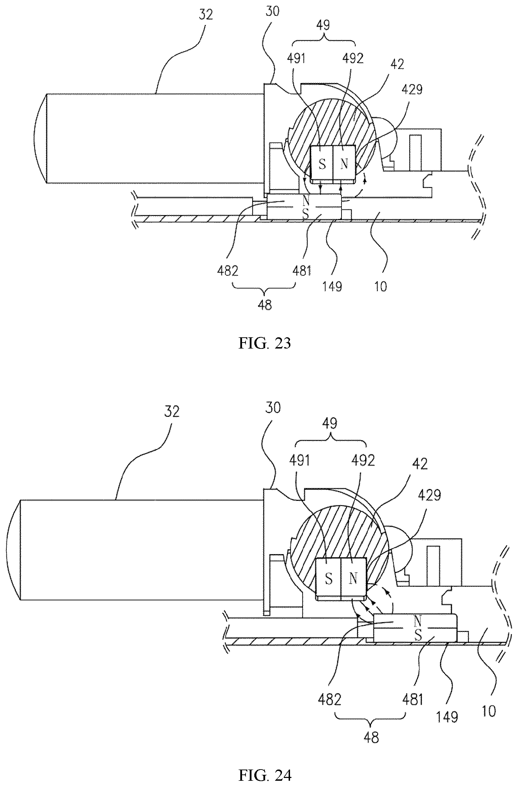

Referring to FIG. 23, FIG. 24, FIG. 25, and FIG. 26, different from the first implementation, the shaft sleeve 42 defines a first fixing groove 429, where an opening of the first fixing groove 429 is located on a periphery of the shaft sleeve 42 and is in a direction perpendicular to the longitudinal direction of the prong 30. The first magnetic member 49 is fixed in the first fixing groove 429. The first magnetic member 49 is offset relative to the central axis of the rotating shaft 31, so that the first magnetic member 49 can drive the rotating shaft 31 to rotate. The first magnetic member 49 is provided with a first south pole 491 and a first north pole 492, where a direction in which the first south pole 491 is opposite to the first north pole 492 is perpendicular to the axial direction of the rotating shaft 31 and parallel to the longitudinal direction of the pin post 32. The first south pole 491 and the first north pole 492 are both partially exposed to the outside of the first fixing groove 429, so that the first south pole 491 and the first north pole 492 can both magnetically cooperate with the second magnetic member 48. The housing 10 defines a second fixing groove 149 on an inner surface adjacent to the rear surface 14. The second magnetic member 48 is fixed in the second fixing groove 149. The second magnetic member 48 is provided with a second south pole 481 and a second north pole 482, where a direction in which the second south pole 481 is opposite to the second north pole 482 is perpendicular to the front surface. The second north pole 482 is at least partially exposed to the outside of the second fixing groove 149, so that the second north pole 482 can magnetically cooperate with the first south pole 491 and the first north pole 492.

Optionally, the housing 10 is provided with resisting plates 148 at both ends of the second fixing groove 149 in a direction parallel to the sliding direction of the push-pull holder 20. The resisting plates 148 clamp and stabilize the second magnetic member 48, thereby ensuring stability of the second magnetic member 48 relative to the housing 10.

Optionally, each of two ends of the rotating shaft 31 of the prong 30 is provided with the shaft sleeve 42, and the two shaft sleeves 42 each are provided with the first magnetic member 49, which is conducive to balance of the prong 30 during rotation.

Optionally, the housing 10 is provided with two second magnetic members 48, and each of the two second magnetic members 48 cooperate with one of the two first magnetic members 49.

In order to facilitate magnetic cooperation between the first magnetic member 49 and the second magnetic member 48, the second surface 24 of the push-pull holder 20 defines a sliding through-groove 249 in correspondence with the shaft sleeve 42. The sliding through-groove 249 slidably fits a portion of the second magnetic member 48, so that the second magnetic member 48 can apply a magnetic force to the first magnetic member 49.

The following will exemplarily elaborate that the prong 30 is driven to rotate relative to the push-pull holder 20 to be open or closed due to magnetic cooperation between the first magnetic member 49 and the second magnetic member 48.

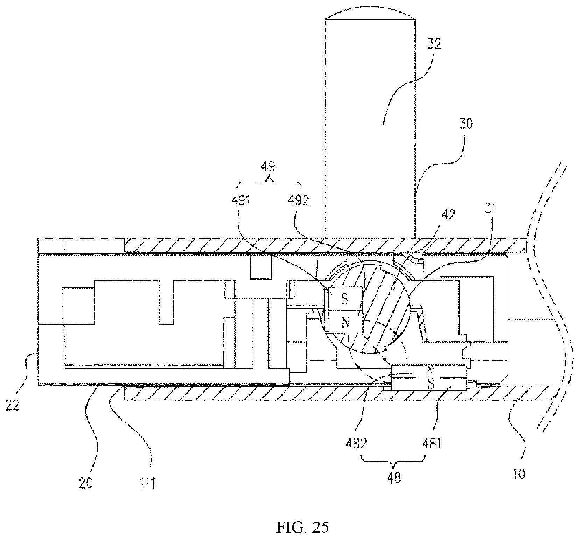

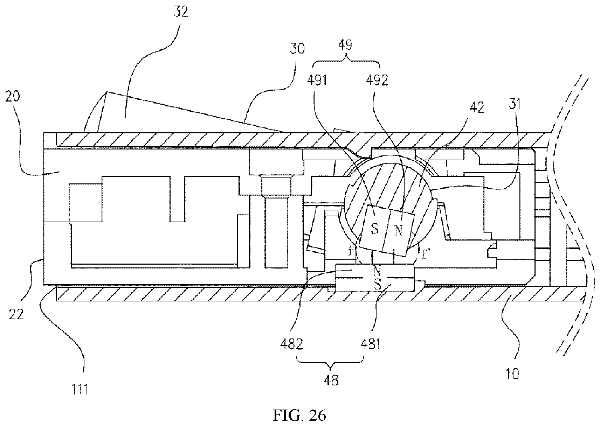

The first south pole 491 is closer to an end of the pin post 32 than the first north pole 492, where the end of the pin post 32 can move away from the accommodating space 11. The second south pole 481 is closer to the rear surface 14 than the second north pole 482. As illustrated in FIG. 23, when the push-pull holder 20 slides to the first position, a direction in which the first south pole 491 is opposite to the first north pole 492 is parallel to the front surface 13, and the second magnetic member 48 is at a side of the rotating shaft 32 close to the first end 21, that is, the second north pole 482 is close to the first south pole 491, so that the second north pole 482 and the first south pole 491 remain in magnetic attraction and thus consistently apply a rotation torque to the prong 30 for driving the prong 30 to be closed relative to the push-pull holder 20. As illustrated in FIG. 24 and FIG. 25, to plug the prong 30 into the power socket, it needs to drive the end of the prong 30 to be away from the accommodating space 11, accordingly, the push-pull holder 20 can be pulled to cause the second magnetic member 48 to slide to a side of the rotating shaft 32 away from the first end 21, that is, the second north pole 482 is close to the first north pole 492, so that the second north pole 482 and the first north pole 492 are in magnetic repulsion and thus drive the prong 30 to rotate relative to the push-pull holder 20 to be open, and finally, when the push-pull holder 20 slides to the second position, a repulsive force between the second magnetic member 48 and the first magnetic member 49 drives the prong 30 to be kept in an open state relative to the push-pull holder 20, and at this point, the end of the prong 30 is away from the accommodating space 11. As illustrated in FIG. 26, when the prong 30 needs to be accommodated in the accommodating space 11, the push-pull holder can be pushed to slide from the second position to the first position where the abutting edge of the housing abuts against the prong. At this point, the abutting edge 133 of the housing 10 pushes the prong 30 to rotate relative to the push-pull holder 20 to be closed, until the second magnetic member 48 slides again to the side of the rotating shaft 32 close to the first end 21, at this point, the second north pole 482 and the first south pole 491 begin to cooperate with each other through magnetic attraction. As such, it is possible to accelerate rotation of the prong 30 relative to the push-pull holder 20 to be closed, such that it seems that the prong 30 is sucked into the accommodating space 11 and thus the prong 30 can be quickly reset to a state in which the prong 30 is closed relative to the push-pull holder 20.

It can be understood that, in the case where a position of the first south pole 491 and a position of the first north pole 492 are reversed, and a position of the second south pole 481 and a position of the second north pole 482 are reversed, the prong 30 can also be driven to rotate relative to the push-pull holder 20 due to magnetic cooperation between the first magnetic member 49 and the second magnetic member 48.

It can be understood that, the second magnetic member 48 may also be implemented as a magnetic member having only one magnetic pole, such that the second magnetic member 48 can cooperate with the two magnetic poles of the first magnetic member 49 respectively to drive the prong 30 to rotate relative to the push-pull holder 20.

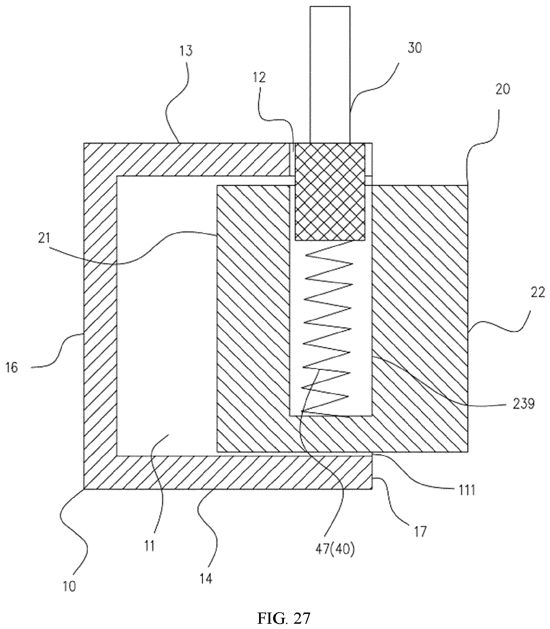

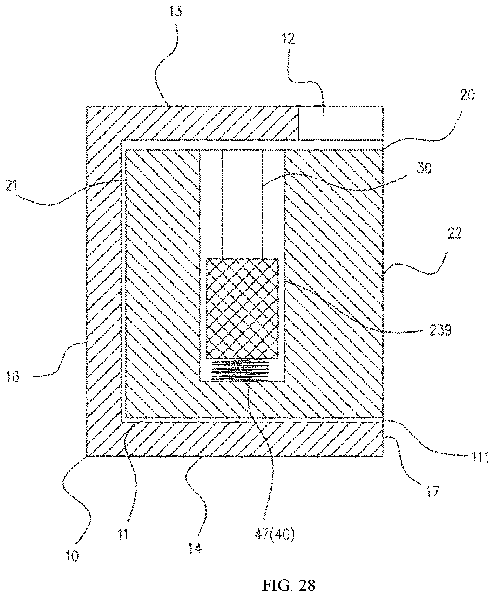

Referring to FIG. 27 and FIG. 28, an eighth implementation is provided. The eighth implementation is substantially the same as the first implementation, except that the prong 30 slides relative to the push-pull holder 20 to be open or closed, and the power assembly 40 is configured to drive the prong 30 to slide relative to push-pull holder 20. Specifically, the push-pull holder 20 defines a sliding groove 239 that extends in a direction perpendicular to the first surface 23, and the prong 20 slidably fits the sliding groove 239. The sliding groove 239 has an extending-retraction opening 238 on the first surface 23. The power assembly 40 is accommodated between a bottom of the sliding groove 239 and the prong 20. When the push-pull holder 20 slides to the second position, the extending-retraction opening 238 of the sliding groove 239 faces the through hole 12, at this point, the prong 30 can be driven by the power assembly 40 to slide relative to the push-pull holder 20 to be open, until the end of the prong 30 extends out from the extending-retraction opening 238 and the through hole 12 and finally is away from the accommodating space 11. When the prong 30 needs to be accommodated in the accommodating space 11, a pressing force can be applied to the prong 30 to press the prong 30 back to the sliding groove 239, and accordingly the push-pull holder 20 is pushed to slide towards the first position, until the prong 30 is finally accommodated in the accommodating space 11.

Optionally, the power assembly 40 is provided with a spring 47. The spring 47 has one end fixedly connected with the prong 30 and the other end abutting against the push-pull holder 20, and is configured to drive the prong 30 to extend out of the push-pull holder. When the push-pull holder 20 slides to the first position and the prong 30 is closed relative to the push-pull holder 20, the prong 30 slides along the sliding groove 239 to be accommodated in the sliding groove 239, and the spring 47 is in an elastically compressed state, and at this point, the prong 30 is accommodated in the accommodating space 11. When the push-pull holder 239 slides to the second position, sliding of the prong 30 is no longer limited by the housing 10, and thus elastic potential energy of the spring 47 can be released, so that the prong 30 can slide along the sliding groove 239 until the end of the prong 30 extends out of the through hole 12, and finally the prong 30 can slide to be in a state in which the prong 30 is stably connected with the push-pull holder 20 and thus can be plugged into the power socket.

In other implementations, the prong 30 may be driven manually to slide relative to the push-pull holder 20. In order for that the pin posts 32 of the prong 30 are not touched by the user, the push-pull holder 20 may be provided with a manual driving structure on the second side-surface 25 of the push-pull holder 20, and with aid of the manual driving structure, the prong 30 can be driven to slide relative to the push-pull holder 20.

It can be understood that, when the push-pull holder 20 slides relative to the housing 10, a transmission mechanism may be used for transmitting a sliding torque of the housing 10 to the prong 30, so that the prong 30 slides to retract into the push-pull holder 20, thereby realizing synchronous linkage between the prong 30 and the push-pull holder 20. As such, it is possible to ensure that when the push-pull holder 20 slides to the first position, the prong 30 slides and retracts to be fully closed relative to the push-pull holder 20 and is fully accommodated in the accommodating space 11; and when the push-pull holder 20 slides to the second position, the prong 30 slides relative to the push-pull holder 20 to be open, and the end of the prong 30 away from the push-pull holder 20 extends out of the accommodating space 11.

In the implementations of the disclosure, there is no limitation on the manner in which the prong 30 moves relative to the housing 10 to be open or closed. Besides that the prong 30 rotates or slides relative to the housing 10 to be open or closed described in the foregoing implementations, the prong 30 can also slide and rotate relative to the push-pull holder 20 to be open or closed. There is also no limitation on a power source for driving the prong 30 to move relative to the push-pull holder 20. Besides manual driving, driving with aid of the driving mechanism, or driving with aid of the power source described in the foregoing implementations, manual driving and driving with aid of the driving mechanism may also be combined for driving the prong 30 to move relative to the push-pull holder 20.

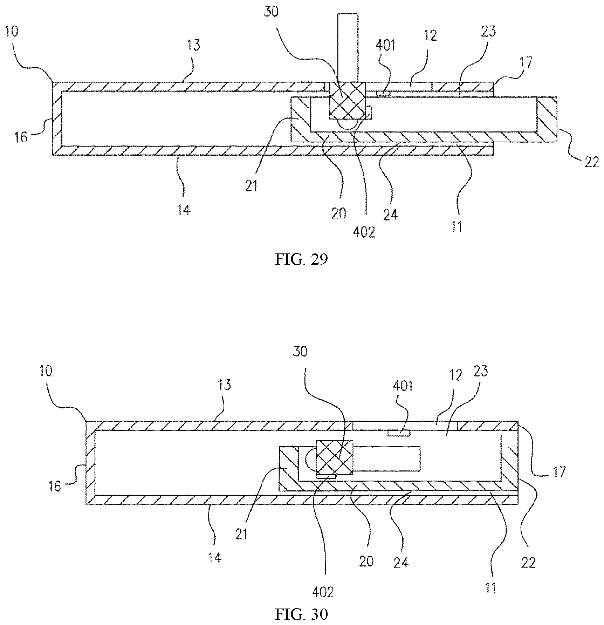

Referring to FIG. 29 and FIG. 30, a ninth implementation is provided. The ninth implementation is substantially the same as the first implementation, except that when the prong 30 is staggered from the through hole 12, the power assembly 40 stops providing a rotation torque to the prong 30; and when the prong 30 moves to the position facing the through hole 12, the power assembly 40 begins to provide a rotation torque to the prong 30, such that the prong 30 can rotate out of the through hole 12. In this way, it is possible to prevent the prong 30 from consistently applying a force to the housing 10, thereby reducing fatigue and damage to the housing 10. For example, the power assembly 40 is provided with a first magnet 401 fixed on an inner wall of the housing 10 and a second magnet 402 fixed at the prong 30. When the prong 30 moves to the position facing the through hole 12, the first magnet 401 and the second magnet 402 are close to each other, and the first magnet 401 and the second magnet 402 are magnetically attracted or repulsed to each other and thus the prong 30 is driven to rotate relative to the housing 10, until the prong 30 extends out of the through hole 12. Specifically, the first magnet 401 is fixed at a position on the housing 10 close to the through hole 12, and the second magnet 402 is fixed at a position on the prong 30 that is offset relative to the central axis of the rotating shaft 31.

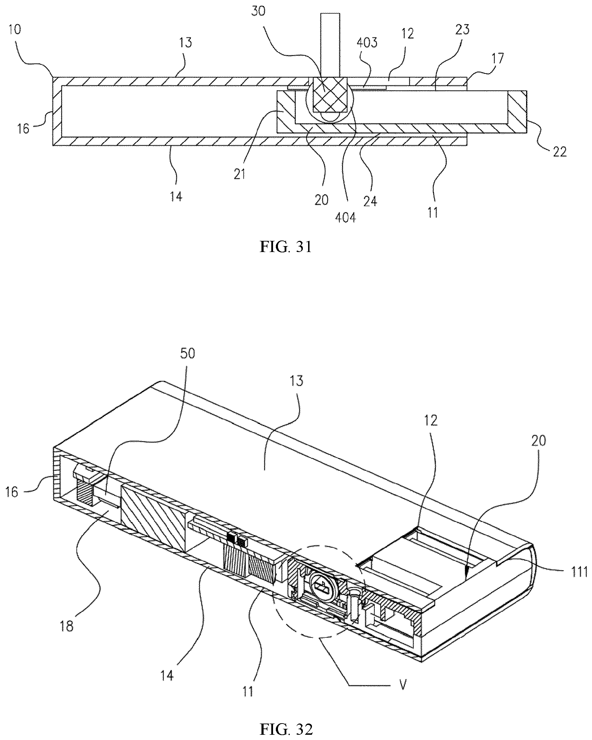

Referring to FIG. 31, a tenth implementation is provided. The tenth implementation is substantially the same as the first implementation, except that the power assembly 40 is provided with a driving-energy storing member 403 and a transmission assembly 404. The driving-energy storing member 403 is disposed on an inner wall of the housing 10, and the transmission assembly 403 is connected with the prong 30. When the prong 30 moves to the position facing the through hole 12, the transmission assembly 404 is connected with the driving-energy storing member 403, and the driving-energy storing member 403 can release driving energy to the transmission assembly 404 through the through hole 12, such that the prong 30 is rotated out of the through hole 12 via the transmission assembly. The driving-energy storing member 403 may be a spring, and the transmission assembly 404 may be a rack and a gear that are meshed with each other. The housing 10 is provided with a button, and with aid of the button, the spring can be controlled to release driving energy to the rack to rotate the gear, and finally the gear can drive the prong 30 to rotate.

Optionally, the button may be disposed on the first side-surface 15, or may be disposed on the first end-surface 16 or the second end-surface 17.

The button may be substituted by a knob. A rotation torque of the knob can be used to control the driving-energy storing member 403 to release driving energy to the transmission assembly 404 or not to release driving energy to the transmission assembly 404, and thus movement of the prong 30 relative to the push-pull holder 20 can be realized.

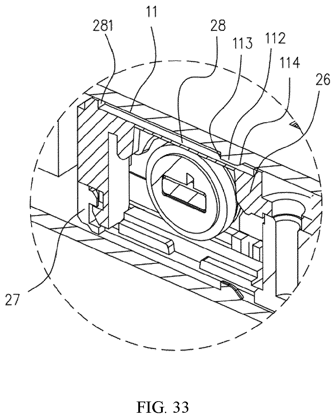

Further, referring to FIG. 32, FIG. 33, and FIG. 34, the housing 30 is provided with a limiting protrusion 112 on the inner surface of the housing, and the push-pull holder 20 defines a limiting slot 28 on the outer surface of the push-pull holder 20, where the limiting slot 28 slidably fits the limiting protrusion 112. The limiting slot 28 extends in a direction parallel to the sliding direction of the push-pull holder 20. Two ends of the limiting slot 28 are closed for limiting sliding of the push-pull holder 20 relative to the housing 10. When the push-pull holder 20 drives the prong 30 to rotate out of the through hole 12, the limiting protrusion 112 abuts against an end of the limiting slot 28 close to the second end-surface 17, to limit further sliding of the push-pull holder 20 towards the second end 17. When the push-pull holder 20 drives the prong 30 to be accommodated in the housing 10, the limiting protrusion 112 abuts against an end of the limiting slot 28 close to the first end-surface 16, to limit further sliding of the push-pull holder 20 towards the first end-surface 16.

In order for detailed illustration of fitting between the limiting protrusion 112 and the limiting slot 28, the first implementation is taken as an example for illustration. In other implementations, as to fitting between the limiting protrusion 112 and the limiting slot 28, reference can be made to the first implementation.

In the first implementation, the push-pull holder 20 defines one limiting slot 28 on the first surface 23 and defines one limiting slot 28 on the second surface 24, and the housing 10 is provided with one limiting protrusion 112 at a position on the inner surface of the housing 10 adjacent to the front surface 13 and provided with one limiting protrusion 112 at a position on the inner surface of the housing 10 adjacent to the rear surface 14. When the push-pull holder 20 slidably fits the housing 10, the limiting protrusion 112 slidably fits the limiting slot 28. The limiting protrusion 112 has a first sidewall 113 at a side of the limiting protrusion 112 close to the end plate 16, where the first sidewall 113 is perpendicular to the front surface 13 or the rear surface 14. The limiting protrusion 112 has a second sidewall 114 at a side of the limiting protrusion 112 away from the end plate 16, where the second sidewall 114 is inclined relative to the first sidewall 113. The limiting protrusion 112 is in the accommodating space 11 at a position close to the through hole 12, and is located at a side of the through hole 12 away from the opening 111, so as to limit sliding of the push-pull holder 20 in a direction in which the push-pull holder 20 extends out of the opening 111 after the prong 30 is rotated out of the through hole 12. The limiting slot 28 has limiting sidewalls 281 respectively at the two opposite closed ends of the limiting slot 28, where the limiting sidewall 281 is perpendicular to the first surface 23 or the second surface 24. When the first sidewall 113 abuts against the limiting sidewall 281, the push-pull holder 20 cannot slide relative to the housing 10 in a direction in which the push-pull holder 20 extends out of the opening 111, thereby ensuring safety of the push-pull holder 20 and the housing 10. During installation of the push-pull holder 20 in the housing 10, in order to facilitate insertion of the push-pull holder 20 into the accommodating space 11 through the opening 111, the first end 21 is provided with lead-in chamfers 211 that are respectively at a position where an end-surface of the first end 21 and the first surface 23 define an included angle and at a position where the end-surface of the first end 21 and the second surface 24 define an included angle. The second sidewall 114 fits the lead-in chamfers 211, which is possible to reduce a resisting force of the limiting protrusion 112 to the push-pull holder 20 during insertion and sliding of the push-pull holder 20, thereby facilitating insertion of the push-pull holder 20 into the accommodating space 11, and on the other hand, the limiting protrusion 112 can slide into the limiting slot 28 through the front surface 23.

Optionally, the first surface 23 defines two limiting slots 28 spaced apart from each other, and the second surface 24 defines two limiting slots 28 spaced apart from each other. The housing 10 is provided with two limiting protrusions 112 that are spaced apart from each other at a position on the inner surface of the housing 10 adjacent to the front surface 13 and two limiting protrusions 112 that are spaced apparat from each other at a position on the inner surface of the housing 10 adjacent to the rear surface 14.

Optionally, the limiting protrusion 112 may be made of material having elastic deformation properties such as plastic, rubber, or silica gel. The limiting protrusion 112 may also be an elastic sheet having elastic deformation properties.

It can be understood that, in other implementations, the limiting slot 28 may be defined on the inner surface of the housing 10, and the limiting protrusion 112 may be on the outer surface of the push-pull holder 20. The limiting protrusion 112 may also be on an inner wall of the housing 10 adjacent to the side-surface 15, and the limiting slot 28 may be defined on the second side-surface 25.

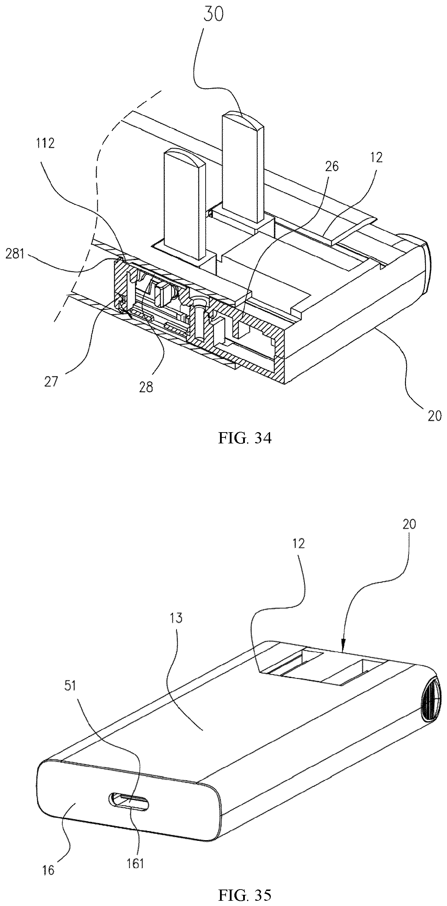

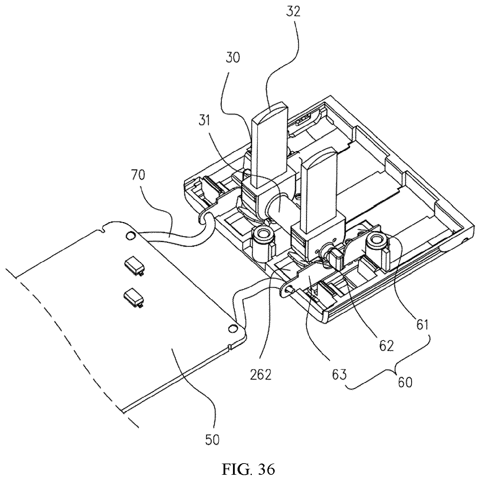

Further, referring to FIG. 35 and FIG. 36, the power adapter 100 further includes a circuit board assembly 50 fixed in the accommodating space 11 and electrically connected with the prong 30.

In the implementations, the circuit board assembly 50 is configured to acquire an external current via the prong 30 and process the external current into a current required by an electronic device. The circuit board assembly 50 is fixed to the housing 10, that is, the circuit board assembly 50 and the prong 30 are in a movement fit relationship. In order to ensure stable conduction between the circuit board assembly 50 and the prong 30, a conductive structure is required to be disposed between the circuit board assembly 50 and the prong 30. In order for detailed illustration of a connection relationship between the circuit board assembly 50 and the prong 30, the first implementation is taken as an example for illustration. In other implementations, for the connection relationship between the circuit board assembly 50 and the prong 30, reference can be made to the first implementation.

In the first implementation, the circuit board assembly 50 is accommodated in the accommodating space 11 at a position close to the first end-surface. The circuit board assembly 50 is away from the opening 111. During installation of the circuit board assembly 50 into the accommodating space 11, the circuit board assembly 50 may be inserted into the accommodating space 11 through the opening 111 and finally inserted to a position close to the first end-surface 16. The circuit board assembly 50 is fixedly connected with the housing 10, or the circuit board assembly 50 may be fixedly connected with the housing 10 via a holder that is fixed in the accommodating space 11. With electrical connection between the circuit board assembly 50 and the prong 30, when the prong 30 is electrically connected with an external power supply, the circuit board assembly 50 can receive an external current and process the external current into a current that can be received by the electronic device.

Specifically, the thickness of the circuit board assembly 50 is substantially equal to a distance between a position on the inner surface of the housing 10 adjacent to the front surface 13 and a position on the inner surface of the housing 10 adjacent to the rear surface 14, such that an internal structure in the housing 10 can be compact after the circuit board assembly 50 is accommodated in the accommodating space 11, and the power adapter 100 can be thin and have better portability.

More specifically, a connector interface 161 is disposed on the first end-surface 16, and the circuit board assembly 50 is provided with an electrical connector 51 that matches the connector interface 161. The electrical connector 51 is a universal serial bus (USB) connector. The electrical connector 51 is electrically connected with a USB cable via the connector interface 161, such that the USB cable connectable with the electronic device can transfer to the electronic device a current that has been processed by the circuit board assembly 50, and thus the electronic device can acquire current via the power adapter 100. The power adapter 100 is provided with the connector interface 161, and as such, the housing 10 can be detachably connected with the USB cable, which is conducive to portability of the power adapter 100.

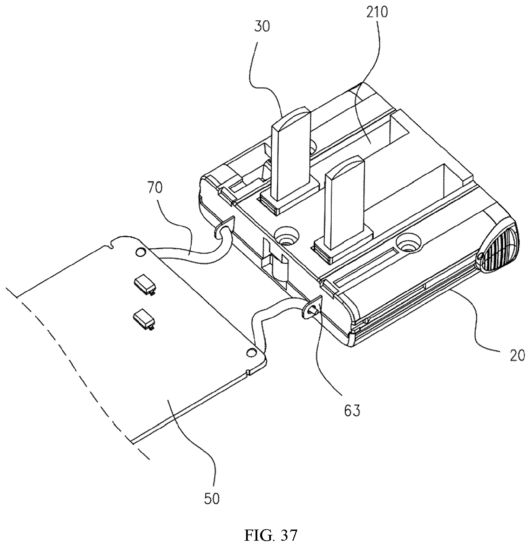

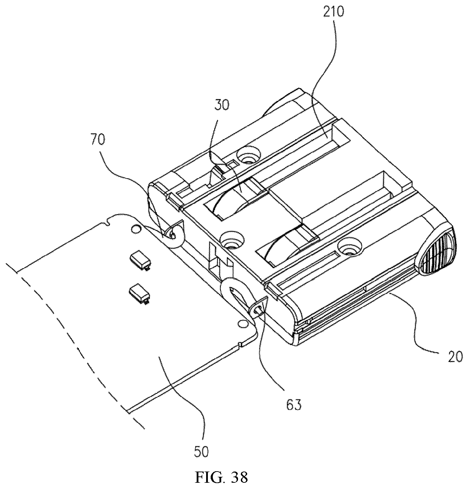

Referring to FIG. 36, FIG. 37, and FIG. 38, the power adapter 100 further includes a conductive elastic sheet 60 and a conductive cable 70. The conductive elastic sheet 60 is fixed at the push-pull holder 20. The conductive elastic sheet 60 has one end elastically abutting against the prong 30 and the other end extending towards the circuit board assembly 50. The conductive cable 70 has one end electrically connected with the end of the conductive elastic sheet 60 extending towards the circuit board assembly 50 and the other end electrically connected with the circuit board assembly 50. The conductive cable 70 is bent during movement of the push-pull holder 20 towards the circuit board assembly 50.

In the implementations, the power adapter 100 includes two conductive elastic sheets 60, where one of the two conductive elastic sheets 60 is electrically connected with one of the two pin posts 32, and the other one of the two conductive elastic sheets 60 is electrically connected with the other one of the two pin posts 32. The pin post 32 has a conductive contact end 322 that penetrates the arc end-surface 332. During rotation of the prong 30 out of the accommodating groove 210, the conductive contact end 322 elastically abuts against the conductive elastic sheet 60. When the prong 30 is fully rotated into the accommodating groove 210, the conductive contact end 322 is separated from the conductive elastic sheet 60.

Specifically, the conductive elastic sheet 60 has a fixing end 61 and a curved end 62. The fixing end 61 is correspondingly clamped between an end of the bearing boss and an inner wall of the second casing 27. The curved end 62 is opposite to the pin post 32 of the prong 30. The curved end 62 curves along a curve. The curved end 62 has elastic deformation properties. When the prong 30 is rotated out of the accommodating groove 210, the conductive contact end 32 is rotated to a position where the conductive contact end 32 contacts the curved end 62, so that the curved end 62 is deformed, and the curved end 62 exerts an elastic resisting force against the conductive contact end 322, and thus the pin post 32 is in close contact with the conductive elastic sheet 60 to enable that there is a damping force during flipping of the pin post 32, that is, there is a damping force during flipping of the prong 30 relative to the push-pull holder 20, thereby reducing an impact force on the push-pull holder 20 during flipping of the prong 30. When the prong 30 is fully rotated into the accommodating groove 210, the conductive contact end 322 is rotated to a position where the conductive contact end 322 is separated from the curved end 62, and thus the curved end 62 returns to a natural extended state.

More specifically, the first casing 26 further defines the elastic-sheet slot 262 at one side of the bearing boss. The conductive elastic sheet 60 is provided with a conductive leg 63 that is snapped into the elastic-sheet slot 262. The conductive leg 63 has one end extending towards the circuit board assembly 50 and electrically connected with the conductive cable 70. The conductive leg 63 is stabilized in the elastic-sheet slot 262, such that the conductive leg 63 can still remain in effective contact with the conductive cable 70 after multiple flipping of the prong 30 relative to the push-pull holder 20, which is conducive to stability of the conductive elastic sheet 60 and effective conduction between the conductive elastic sheet 60 and the conductive cable 70, thereby increasing a service life of the power adapter 100. The conductive cable 70 can be bent, which facilitates sliding of the push-pull holder 20 relative to the housing 10, thereby ensuring smooth sliding of the push-pull holder 20.

Optionally, the conductive leg 63 defines a through groove. An end of the rotating shaft 31 penetrates the through groove, which is convenient for the end of the rotating shaft 31 to receive a driving force of the power assembly 40.

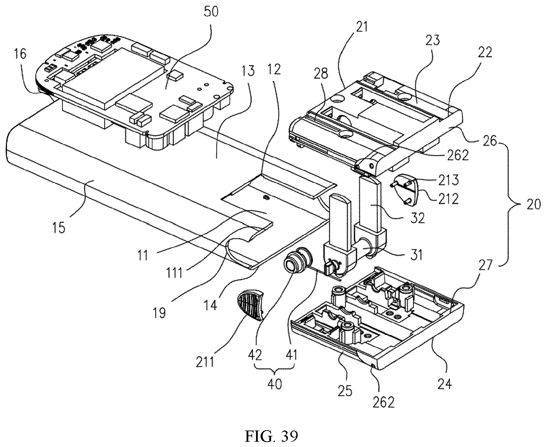

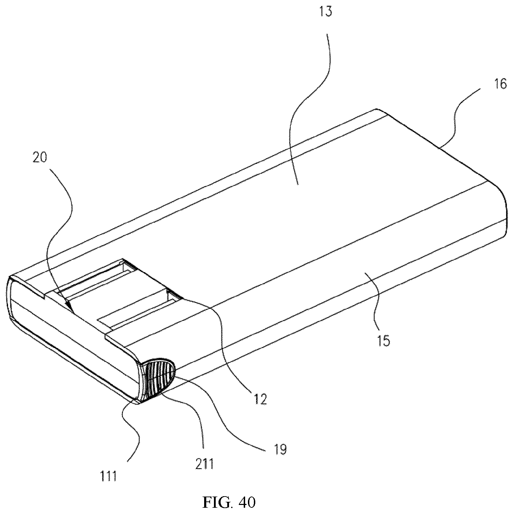

Referring to FIG. 39, FIG. 40, and FIG. 41, in the first implementation, a portion of the push-pull holder 20 is exposed to the outside of the housing 10. The portion of the push-pull holder 20 exposed to the outside of the housing 10 is configured to receive a push-pull driving force, such that the push-pull holder 20 is slidable in the accommodating space 11. The portion of the push-pull holder 20 exposed to the outside of the housing 10 can receive an external driving force. For example, the portion of the push-pull holder 20 exposed to the outside of the housing 10 can receive a push-pull force of the user. When the portion of the push-pull holder 20 exposed to the outside of the housing 10 is manually pushed to slide towards the first end-surface 16, that is, when the push-pull holder 20 slides from the second position to the first position, the push-pull holder 20 drives the prong 30 to move to the accommodating space 11, and the prong 30 moves relative to the push-pull holder 20 to be closed due to a resisting force of the housing 10, until the prong 30 is rotated into the accommodating space 11. When the portion of the push-pull holder 20 exposed to the outside of the housing 10 is manually pulled to slide away from the first end-surface 16, that is, when the push-pull holder 20 slides from the second position to the first position, the push-pull holder 20 drives the prong 30 to move to the position facing the through hole 12, and at this point, a driving force of the power assembly 40 drives the end of the prong 30 to rotate out of the accommodating space 11 and extend out of the housing 10.

Specifically, the housing 10 defines a push-pull recess 19, and the push-pull holder 20 is provided with a push-pull button 211 that slidably fits the push-pull recess 19, where the push-pull button 211 is exposed to the outside of the housing 10 through the push-pull recess 19. The housing 10 defines the push-pull recess 19 on each of the two first side-surfaces 15, and the push-pull holder 20 is provided with two push-pull buttons 211, where one of the two push-pull buttons 211 is disposed on one of the two second side-surfaces 25 of the push-pull holder 20, and the other one of the two push-pull buttons 211 is disposed on the other one of the two second side-surfaces 25 of the push-pull holder 20. The push-pull buttons 211 are respectively disposed at two sides of the push-pull holder 20 along a width direction, thereby avoiding increase in overall thickness of the power adapter 100.

Optionally, the push-pull button 211 includes a push-pull plate 212 and at least two insertion posts 213 disposed at an inner side of the push-pull plate 212. The first casing 26 defines at least one insertion hole 262 at a side edge of the first casing 26, and the second casing 27 defines at least one insertion hole 262 at a side edge of the second casing 27. For the at least two insertion posts 213 of the push-pull button 211 and at least two insertion holes 262 that are at the same side of the push-pull holder 20, the at least two insertion posts 213 are respectively inserted into and fits the at least two insertion holes 262, which is conducive to stability of the push-pull button 211 relative to the first casing 26 and the second casing 27.

Optionally, a surface of the push-pull plate 212 away from the insertion posts 213 is set to a corrugated curved surface, so that a friction force between the push-pull plate 212 and a finger of the user that contacts the push-pull plate 212 can be increased, which facilitates application of a push-pull force to the push-pull button 211 by the user.

In other implementations, the push-pull button 211 may also be integrally formed with the first casing 26 or the second casing 27, thereby improving stability of the push-pull button 211 relative to the first casing 26 or the second casing 27.

More specifically, the push-pull recess 19 is defined at a position on the first side-surface 15 adjacent to the second end-surface 17 and communicates with the opening 111, and the push-pull button 211 is disposed at the second end 22 of the push-pull holder 20. When the push-pull holder 20 slides to the first position and the prong 30 is rotated into the accommodating space 11, the second end 22 fits the opening 111, and the push-pull button 211 slides into the push-pull recess 19 and fills the push-pull recess 19. When the push-pull holder 20 slides to the second position and the prong 30 is away from the accommodating space 11, the second end 22 extends out of the housing 10, and the push-pull button 211 slides out of the push-pull recess 19.

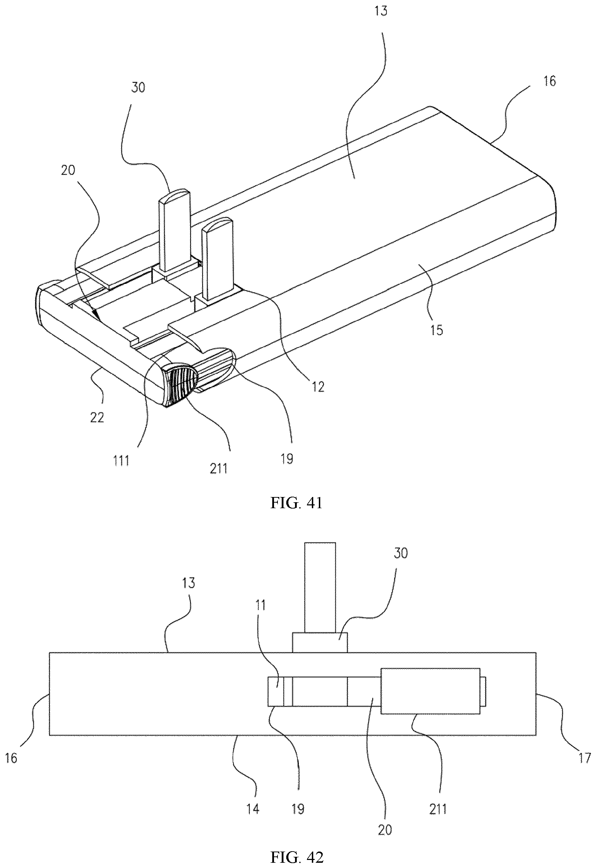

In an eleventh implementation, referring to FIG. 42, the push-pull recess 19 is isolated from the first end-surface 16 and the second end-surface 17, and two ends of the push-pull recess 19 are closed. The push-pull button 211 can slide back and forth between the two ends of the push-pull recess 19, so as to drive the pushing holder 20 to slide back and forth between the first end-surface 16 and the second end 17. When the push-pull holder 20 slides to the first position, the push-pull button 211 slides to an end of the push-pull recess 19 close to the first end-surface 16, and the push-pull holder 20 drives the prong 30 to rotate into the accommodating space 11. When the push-pull holder 20 slides to the second position, the push-pull button 211 slides to an end of the push-pull recess 19 close to the second end-surface 17, and the push-pull holder 20 drives the prong 30 to be away from the accommodating space 11.

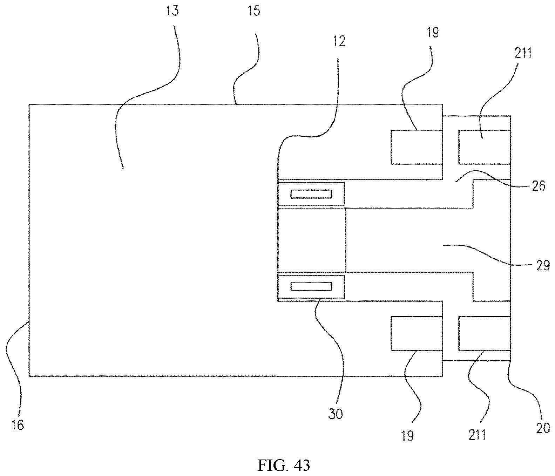

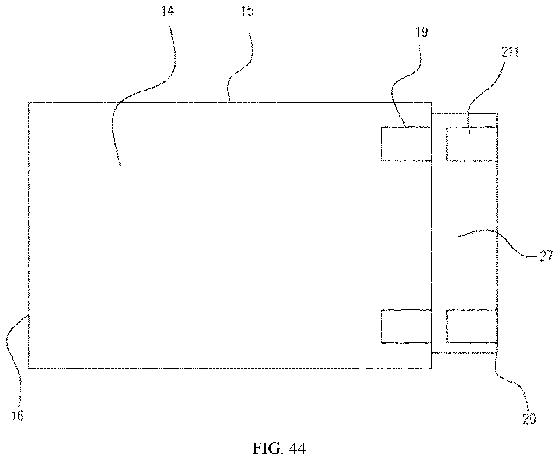

Referring to FIG. 43 and FIG. 44, a twelfth implementation is provided. the twelfth implementation is substantially the same as the first implementation, except that the front plate 13 and the rear plate 14 each define two push-pull recesses 19. The front plate 13 defines two push-pull recesses 19, where the two push-pull recesses 19 of the front plate 13 are respectively at two sides of the through hole 12. The first casing 26 is provided with two push-pull buttons 211 on an outer surface of the first casing 26, and the second casing 27 is provided with two push-pull members 211 on an outer surface of the second casing 27, so that the user can hold a portion of the pushing holder along a thickness direction, such that sliding of the push-pull holder 20 relative to the housing 10 can be realized.

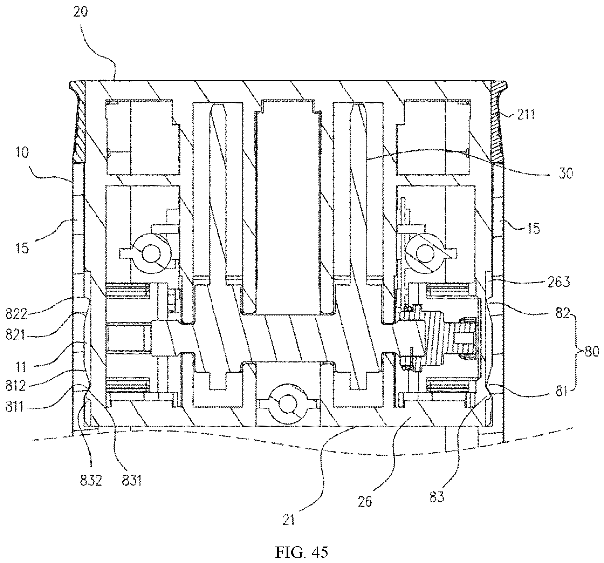

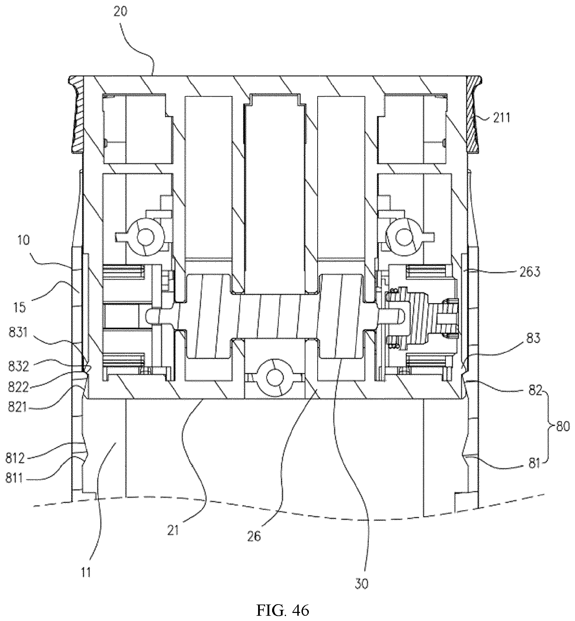

Further, referring to FIG. 45 and FIG. 46, the power adapter 100 further includes a damping mechanism 80 disposed between the housing 10 and the push-pull holder 20. The damping mechanism 80 is configured to provide a damping force during sliding of the push-pull holder 20 relative to the housing 10.

In the implementations, the damping mechanism 80 is disposed in the accommodating space 11. The damping mechanism 80 is located at a position where the inner surface of the housing 10 fits the outer surface of the push-pull holder 20. Under a damping force of the damping mechanism 80, there is a sense of stagnation during sliding of the push-pull holder 20 relative to the housing 10, which is possible to avoid excessive smoothness when the push-pull holder 20 slides relative to the housing 10, thereby avoiding mutual impact between the push-pull holder 20 and the housing 10.

In the first implementation, the damping mechanism 80 includes a first damping protrusion 81, a second damping protrusion 82, and a sliding protrusion 83. The first damping protrusion 81 and the second damping protrusion 82 are provided on the inner surface of the housing 10, and the sliding protrusion 83 is provided on the outer surface of the push-pull holder 20. The first damping protrusion 81 and the second damping protrusion 82 are spaced apart from each other along the sliding direction of the push-pull holder 20. The sliding protrusion 83 is able to abut against the first damping protrusion 81, such that the push-pull holder 20 is subject to a damping force when driving the end of the prong 30 to be finally away from the accommodating space 11, that is, the push-pull holder 20 is subject to a damping force when the push-pull holder 20 is about to slide to the second position. The sliding protrusion 83 is able to abut against the second damping protrusion 82, such that the push-pull holder 20 is subject to a damping force when driving the end of the prong 30 to begin to move away from the accommodating space 11, that is, the push-pull holder 20 is subject to a damping force when the push-pull holder 20 begins to slide from the first position to the second position.

Specifically, the first damping protrusion 81 and the second damping protrusion 82 are both provided at a position on the inner surface of the housing 20 adjacent to the first side-surface 15. The first damping protrusion 81 is closer to the first end-surface 16 than the second damping protrusion 82, and the second damping protrusion 82 is closer to the opening 111 than the first damping protrusion 81. The sliding protrusion 83 is provided at a side edge of the first casing 26. The first casing 26 defines a damping sliding-groove 263 at the side edge of the first casing 26. The sliding protrusion 83 is in the damping sliding-groove 263. The first damping protrusion 81 and the second damping protrusion 82 slidably fit the damping sliding-groove 263. The damping sliding-groove 263 has a damping opening at the first end 21, and an end of the damping sliding-groove 263 away from the first end 21 is closed. The sliding protrusion 83 is in the damping sliding-groove 263 at a position close to the damping opening. In other implementations, the damping sliding-groove 263 may also be defined at a side edge of the second casing 27, and the sliding protrusion 83 is provided at the second casing 27. Alternatively, a half of the damping sliding-groove 263 is defined on the side edge of the first casing 26, and the other half of the damping sliding-groove 263 is defined on the side edge of the second casing 27; and a half of the sliding protrusion 83 is provided at the first casing 26, and the other half of the sliding protrusion 83 is provided at the second casing 27.

More specifically, the first damping protrusion 81 has a first inclined surface 811 and a second inclined surface 812 angled relative to the first inclined surface 811. The second damping protrusion 82 has a third inclined surface 821 and a fourth inclined surface 822 angled relative to the third inclined surface 821. During flipping of the prong 30 by the push-pull holder 20 from a closed state to a state in which the prong 30 has been rotated out, the sliding protrusion 83 sequentially abuts against the first inclined surface 811, the second inclined surface 812, the third inclined surface 821, and the fourth inclined surface 822.

The first inclined surface 811 is parallel to the fourth inclined surface 822, and the second inclined surface 812 is parallel to the third inclined surface 821. Taking an inner surface of the side plate 15 as a datum surface, the first inclined surface 811, the second inclined surface 812, the third inclined surface 821, and the fourth inclined surface 822 each can form a sloped surface, where a slope of the first inclined surface 811 is greater than that of the second inclined surface 812.

The sliding protrusion 83 has a fifth inclined surface 831 substantially parallel to the first inclined surface 811 and a sixth inclined surface 832 substantially parallel to the second inclined surface 812. When the push-pull holder 20 is about to slide from the first position to the second position, the prong 30 is accommodated in the accommodating space 11, and the first inclined surface 811 abuts against the fifth inclined surface 831. At this point, there is a great sense of stagnation when the push-pull holder 20 is pushed to drive the prong 30 to move away from the accommodating space 11, and a relatively great pushing force needs to be applied to the push-pull holder 20 in order to drive the push-pull holder 20 to slide, which is possible to avoid sliding of the push-pull holder 20 relative to the housing 10 that is caused by gravity. When the fifth inclined surface 831 slides over the first inclined surface 811 and the sixth inclined surface 832 slidably fits the second inclined surface 812, a damping force applied to the push-pull holder 20 during sliding of the push-pull holder 20 suddenly decreases, and there is a sense of pushing during sliding of the push-pull holder 20 to the second position relative to the housing 10. When the fifth inclined surface 831 slides to a position where the fifth inclined surface 831 abuts against the third inclined surface 821, the push-pull holder 20 is about to slide to the second position, the prong 30 is open relative to the push-pull holder 20, and the end of the prong 30 is about to move to be fully away from the accommodating space 11. At this point, the push-pull holder 20 is once again subject to a damping force that is relatively small, and thus there is a sense of stagnation when the push-pull holder 20 slides relative to the push-pull holder 20, so as to reduce a speed at which the prong 30 rotates to be finally away from the accommodating space 11, thereby avoiding impact between the prong 30 and the push-pull holder 20 as well as impact between the push-pull holder 20 and the housing 10 and ensuring safety of the power adapter 100. When the fifth inclined surface 831 slides over the third inclined surface 821 and the sixth inclined surface 832 slidably fits the fourth inclined surface 822, the push-pull holder 20 slides to the second position, the end of the prong 30 moves quickly to be finally away from the accommodating space 11, and the push-pull holder 20 is once again pushed and kept stationary. As such, with aid of a relatively great resisting force of the fourth inclined surface 822 against the sixth inclined surface 832, the push-pull holder 20 cannot retract, so that the end of the prong 30 is kept fully away from the accommodating space and thus can be effectively plugged into an external power socket.

Optionally, the first damping protrusion 81 and the second damping protrusion 82 are integrally formed with the housing 10. The sliding protrusion 83 is integrally formed with the first casing 26.

Optionally, there are first damping protrusions 81 and second damping protrusions 82 at positions on the inner surface of the housing 10 that are respectively adjacent to the two first side-surfaces 15, and there are sliding protrusions 83 at both side edges of the first casing 26.

In other implementations, the first damping protrusion 81 and the second damping protrusion 82 may be provided at a position on the inner surface of the housing 10 adjacent to the front surface 13 or a position on the inner surface of the housing 10 adjacent to the rear surface 14. The sliding protrusion 83 may be provided on an outer surface of the first casing 26 or an outer surface of the second casing 27.

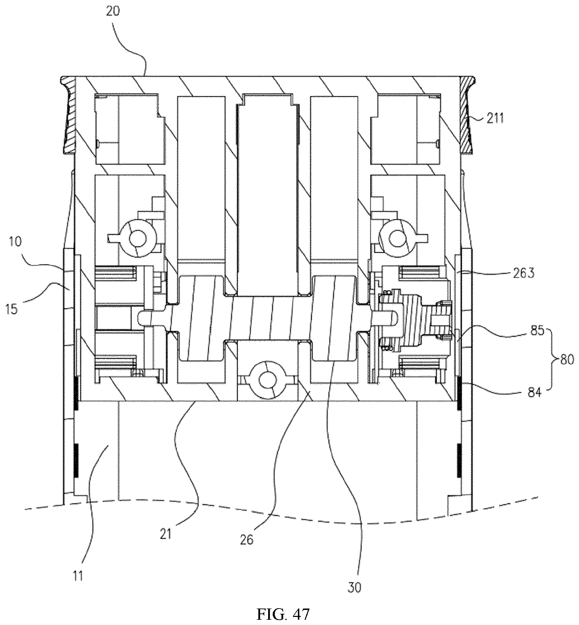

Referring to FIG. 47, a thirteenth implementation is provided. The thirteenth implementation is substantially the same as the first implementation, except that the damping mechanism 80 includes a first damping member 84 fixed on the inner surface of the housing 10 and a second damping member 85 fixed on the outer surface of the push-pull holder 20. The first damping member 84 and the second damping member 85 are configured to magnetically cooperate with each other, such that the push-pull holder 20 is subject to a magnetic resisting force during sliding of the push-pull holder 20 relative to the housing 10.

The first damping member 84 is fixed at an inner side of the side plate 15, and the second damping member 85 is fixed at the side edge of the first casing 26. The first damping member 84 is implemented as two first damping members, where the two first damping members 84 are spaced apart from each other along the sliding direction of the push-pull holder 20. The second damping member 85 is disposed at the first end 21 of the push-pull holder 20. When the second damping member 85 slides to a position where the second damping member 85 magnetically cooperates with the first damping member 84 that is close to the end plate 16 (see FIG. 1), the first damping member 84 applies an attractive force or repulsive force to the second damping member 85 to prevent the push-pull holder 20 from sliding relative to the housing 10, so that the push-pull holder 20 is kept in a retracted state relative to the housing 10, that is, the prong 30 is kept closed relative to the push-pull holder 20. When the second damping member 85 slides to a position where the second damping member 85 magnetically cooperates with the first damping member 84 that is away from the end plate 16, the first damping member 84 applies an attractive force or repulsive force to the second damping member 85 to prevent the push-pull holder 20 from moving relative to the housing 10, so that the push-pull holder 20 is kept in a state in which the push-pull holder 20 extends out of the housing 10, that is, the end of the prong 30 is kept away from the accommodating space 11.

Optionally, the first damping member 84 is a magnet, and the second damping member 85 is a magnet.

Optionally, the first damping member 84 is a magnetic iron, and the second damping member 85 is an iron member.

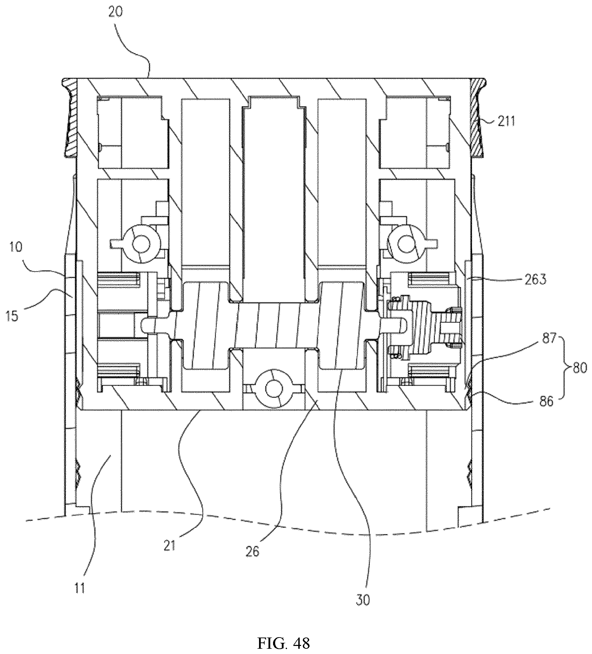

Referring to FIG. 48, a fourteenth implementation is provided. The fourteenth implementation is substantially the same as the first implementation, except that the damping mechanism 80 includes a damping elastic member 86 disposed between the housing 10 and the push-pull holder 20. The damping elastic member 86 is configured to provide an elastic force for preventing the push-pull holder 20 from sliding relative to the housing 10.

The damping elastic member 86 is fixed at an inner side of the side plate 15. The damping mechanism 80 further includes a damping abutting member 87 fixed at the first casing 26. The damping elastic member 86 is implemented as two damping elastic members, where the two damping elastic members 86 are spaced apart from each other along the sliding direction of the push-pull holder 20. The damping abutting member 87 is disposed at the first end 21 of the push-pull holder 20. The damping elastic member 86 defines a slot. When the damping abutting member 87 slides to a position where the damping abutting member 87 fits the slot, the damping elastic member 86 applies an elastic clamping force to the damping abutting member 87, so that the push-pull holder 20 is subject to a damping force against sliding of the push-pull holder 20 relative to the housing 10, and when a driving force on the push-pull holder 20 is removed, the push-pull holder 20 can be kept stationary relative to the housing 10. When the damping abutting member 87 slides to a position where the damping abutting member 87 is clamped by the damping elastic member 86 that is close to the first end-surface 16, the damping elastic member 86 applies an elastic clamping force to the damping abutting member 87 to prevent the push-pull holder 20 from sliding relative to the housing 10, so that the push-pull holder 20 is kept in a retracted state relative to the housing 10, that is, the prong 30 is kept closed relative to the push-pull holder 20. When the damping abutting member 87 slides to a position where the damping abutting member 87 is clamped by the damping elastic member 86 that is away from the first end-surface 16, the damping elastic member 86 applies an elastic clamping force to the damping abutting member 87 to prevent the push-pull holder 20 from sliding relative to the housing 10, so that an end of the push-pull holder 20 is kept away from the accommodating space 11, that is, the prong 30 is kept open relative to the push-pull holder 20.

It can be understood that, for the power adapter 100 of the disclosure, the manner in which the push-pull holder 20 is driven to slide is not limited to that the push-pull button 19 (see FIG. 20) receives a push-pull force of the user to slide the push-pull holder 20 described above. For example, the power adapter 100 may be provided with a driving mechanism that is disposed in the housing 10, and the push-pull holder 20 is driven to slide by the driving mechanism.

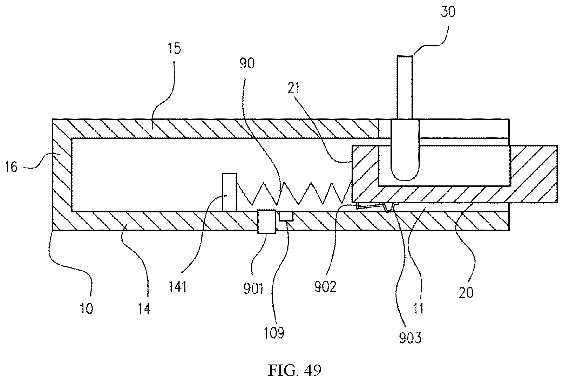

For example, referring to FIG. 49, in a fifteenth implementation, the fifteenth implementation is substantially the same as the first implementation, except that the power adapter 100 further includes an elastic driving member 90. The elastic driving member 90 is elastically connected with the housing 10 and the push-pull holder 20. The elastic driving member 90 is configured to drive the push-pull holder 20 to slide relative to the housing 10. When the push-pull holder 20 retracts relative to the housing 10, the elastic driving member 90 is compressed and deformed and begins to store driving energy, and at this point, the prong 30 begins to be rotated into the accommodating space 11. When the elastic driving member 90 releases driving energy to the push-pull holder 20, the elastic driving member 90 drives the push-pull holder 20 to slide to extend out of the housing 10, and drives the prong 30 to move to the position facing the through hole 12, and at this point, the prong 30 can be rotated out of the housing 10 under a driving force of the power assembly 40.

Specifically, the housing 10 is provided with a resisting plate 141 at a position on the inner surface of the housing 10 adjacent to the rear surface 14. The elastic driving member 90 has one end fixed at the resisting plate 141 and the other end fixed at the first end 21 of the push-pull holder 20. The power adapter 100 further includes an unlocking part 901 disposed at the housing 10. The unlocking part 901 is connected with the elastic driving member 90, and configured to unlock the elastic driving member 90 to transmit a driving force of the elastic driving member 90 to the push-pull holder 20. The unlocking part 901 is a pressing button. The power adapter 100 further includes a locking member 902. The locking member 902 is disposed at a position on a periphery of the push-pull holder 20 close to the first end 21. The locking member 902 is an elastic piece. The locking member 902 is provided with a locking protrusion 903, and the housing 10 defines a locking recess 109 at an inner wall of the housing 10. When the locking protrusion 903 fits the locking recess 109, the push-pull holder 20 is locked relative to the housing 10 and is kept in a fixed state relative to the housing 10. The unlocking part 901 penetrates the housing 10, and can be pressed for reciprocal movement relative to the housing 10. When the unlocking part 901 is pressed, the unlocking part 901 abuts against the locking member 902, and thus the locking member 902 is elastically deformed, so that the locking protrusion 903 is separated from the locking recess 109, thereby realizing unlocking of the push-pull holder 20 from the housing 10. At this point, driving energy of the elastic driving member 90 can be released to the push-pull holder 20, so as to drive the push-pull holder 20 to move relative to the housing 10.

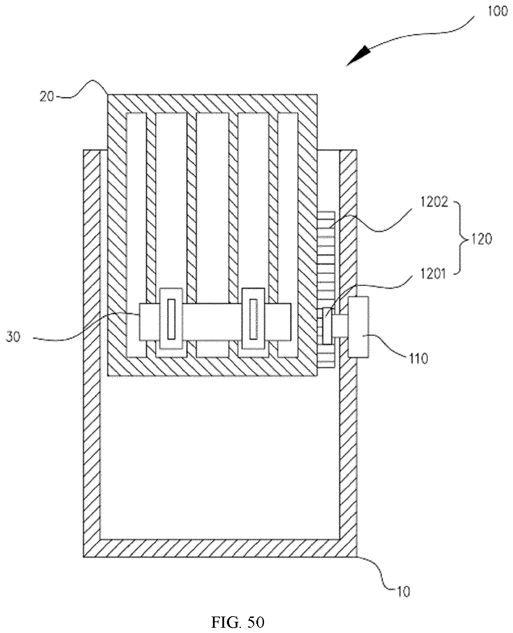

Referring to FIG. 50, a sixteenth implementation is provided. The sixteenth implementation is substantially the same as the first implementation, except that the power adapter 100 further includes a control part 110 slidably connected or rotatably connected with the housing 10, and a transmission part 120 connected with the control part 110 and the push-pull holder 20. The transmission part 120 is configured to transmit a sliding torque or rotation torque of the control part 110 to the push-pull holder 20, such that push-pull holder 20 is slidable relative to the housing 10.

The control part 110 is partially exposed to the outside of the housing 10. The control part 110 can receive an actuation force of the user, such that the control part 110 is slidable or rotatable relative to the housing 10. The control part 110 can drive, via the transmission part 120, the push-pull holder 20 to slide relative to the housing 10, so that the prong 30 can be rotated out of or into the housing 10.

For example, the control part 110 is a knob disposed at the housing 10. The transmission part 120 includes a gear 1201 and a rack 1202 that are disposed at the housing 10 and connected with the control part 110 and the push-pull holder 20. With rotation of the control part 110 by the user, the control part 110 can transmit a rotation torque to the gear 1201, the gear 1201 can drive the rack 1202 to slide, and since the rack 1202 is fixed to the push-pull holder 20, the push-pull holder 20 slides relative to the housing 10 following sliding of the rack 120, so that the prong 30 can be rotated into or rotated out of the housing 10.

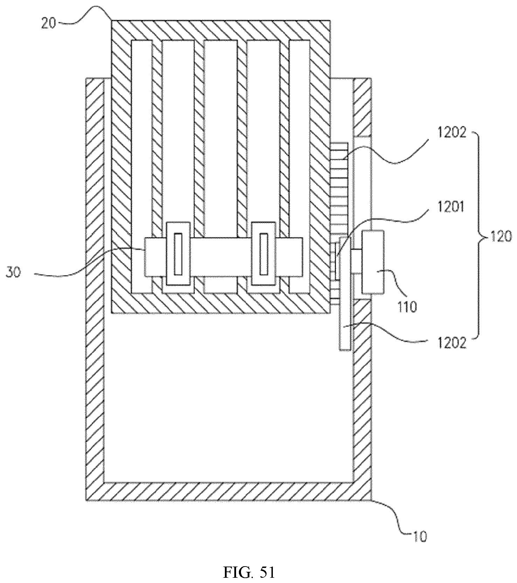

Referring to FIG. 51, for another example, the control part 110 is a sliding button disposed at the housing 10, and the transmission part 120 is implemented as two racks 1202 and the gear 1201 that are disposed inside the housing 10 and connected with the control part 110 and the push-pull holder 20. One of the two racks 1202 is fixed at the control part 110, such that the one of the two racks 1202 can slide relative to the housing 10 along with the control part 110, and the other one of the two racks 1202 is fixed at the push-pull holder 20 for driving the push-pull holder 20 to slide relative to the housing 10. The gear 1201 is meshed with the two racks 1202 to transmit a sliding torque of the control part 110 to the push-pull holder 20. As such, when a pulling force for sliding the control part 110 to the end plate 16 is applied to the control part 110, the push-pull holder 20 can be driven to extend out of the housing 10 and accordingly the prong 30 can be rotated out of the housing 10, which is conducive to convenience and labor saving in rotation of the prong 30 out of the housing 10.

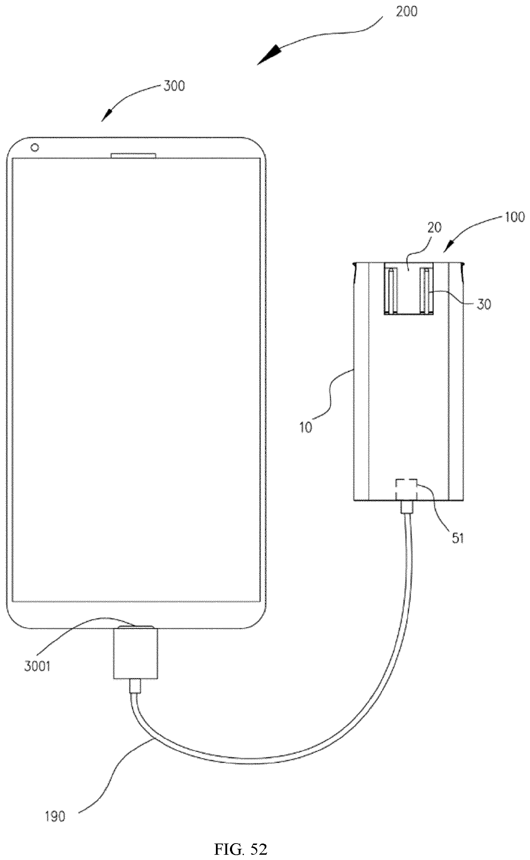

Referring to FIG. 52, the disclosure further provides an electronic device assembly 200. The electronic device assembly 200 includes the power adapter 100 and an electronic device 300. The power adapter 100 is configured to be electrically connected with the electronic device 300, and the power adapter 100 is configured to transmit current to the electronic device 300 when the prong 30 is plugged into the power socket. It can be understood that, the electronic device 300 is provided with a power port 3001. The power adapter 100 is provided with the electrical connector 51 configured to be electrically connected with the power port 3001, and the electrical connector 51 can be electrically connected with the power port 3001 in a wired or wireless manner.

The electronic device 300 may be a computing device such as a laptop computer, a computer monitor containing an embedded computer, a tablet computer, a cellular telephone, a media player, or other handheld or portable electronic devices, a small device such as a wrist-watch device, a pendant device, a headphone or earpiece device, a device that is embedded in glasses or other devices worn on a user's head, or other wearable or miniature devices, a television, a computer display that does not contain an embedded computer, a gaming device, a navigation device, an embedded system such as a system in which an electronic device with a display is mounted in a kiosk or automobile, a device that implements the functionality of two or more of these devices, or other electronic devices. In the exemplary configuration of FIG. 52, the electronic device 300 is a portable device such as a cellular telephone, a media player, a tablet computer, or other portable devices with a battery. It should be noted that, FIG. 52 is only an example.

Optionally, the electronic device 300 is a mobile phone. The power port 3001 is disposed at the bottom of the electronic device 300. Specifically, the power adapter 100 includes a USB cable 190 which has one end that can be plugged into the electrical connector 51 and the other end that can be plugged into the power port 3001. When the prong 30 is flipped relative to the push-pull holder 20 and extends out from the push-pull holder 20, the prong 30 can be plugged into the power socket, so that the power adapter 100 can acquire current. The power adapter 100 can process the acquired current and transmit the processed current to the electronic device 300 via the USB cable 190, so as to charge the electronic device 300.

In the power adapter provided in implementations of the disclosure, the push-pull holder slidably fits the housing, and the prong is movably connected with the push-pull holder. When the prong slides along with the push-pull holder to the first position, the prong is accommodated in the accommodating space. When the prong slides along with the push-pull holder to the second position, the end of the prong is away from the accommodating space. As such, it is conducive to swiftness, convenience, labor saving, and safety in use of the power adapter.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

The above are preferred embodiments of the present disclosure. It should be pointed out that for those of ordinary skill in the art, several improvements and modifications can be made without departing from the principle of the present disclosure, and these improvements and modifications are also regarded as the scope of protection of the present disclosure.

## Claims

1. A power adapter, comprising a housing, a push-pull holder, and a prong, wherein the housing defines an accommodating space, the push-pull holder slidably fits the accommodating space for sliding back and forth between a first position and a second position opposite the first position, and the prong is movably connected with the push-pull holder, wherein when the push-pull holder slides to the first position, the prong moves to a state in which the prong is closed relative to the push-pull holder and accommodated in the accommodating space; and when the push-pull holder slides to the second position, the prong moves to a state in which the prong is open relative to the push-pull holder and an end of the prong is away from the accommodating space.

2. The power adapter of claim 1, wherein the housing has a first end-surface, a second end-surface opposite the first end-surface, and a front surface connected between the first end-surface and the second end-surface, wherein the first position is close to the first end-surface, the second position is close to the second end-surface, and when the end of the prong is away from the accommodating space, the end of the prong exceeds the front surface.

3. The power adapter of claim 2, wherein the first end-surface is closed, and the second end-surface defines an opening that communicates with the accommodating space, wherein when the push-pull holder slides to the first position, the push-pull holder is accommodated in the accommodating space; and when the push-pull holder slides to the second position, the push-pull holder partially extends out of the opening.

4. The power adapter of claim 3, wherein when the push-pull holder slides to the second position, the prong is away from the accommodating space through the opening.

5. The power adapter of claim 3, wherein the front surface defines a through hole that communicates with the opening and the accommodating space, wherein when the push-pull holder slides to the second position, the end of the prong is away from the accommodating space through the through hole.

6. The power adapter of claim 5, wherein the push-pull holder is provided with a boss that fits the through hole, wherein when the push-pull holder slides to the first position, the boss abuts against an inner wall of the through hole away from the opening to limit the push-pull holder.

7. The power adapter of claim 6, wherein the push-pull holder further defines accommodating grooves respectively located at two sides of the boss, and the prong is provided with two pin posts, wherein each of the pin posts is accommodated in or extends out of one of the accommodating grooves.

8. The power adapter of claim 7, wherein the pin post has a root portion that is connected with the push-pull holder, and the prong is further provided with an insulating block wrapped on a periphery of the root portion; wherein during sliding of the push-pull holder from the second position to the first position, the housing abuts against the insulating block and pushes the insulating block to rotate into the accommodating groove, to push the pin post into the accommodating groove.

9. The power adapter of claim 8, wherein the housing has a chamfered surface at a position where the housing is able to abut against the insulating block, wherein during sliding of the push-pull holder from the second position to the first position, the chamfered surface slidably fits a side surface of the insulating block.

10. The power adapter of claim 2, wherein the second end-surface is closed, and the first end-surface defines an opening that communicates with the accommodating space, wherein when the push-pull holder slides to the first position, the push-pull holder partially extends out of the opening, and when the push-pull holder slides to the second position, the push-pull holder is accommodated in the accommodating space.

11. The power adapter of claim 2, wherein the first end-surface and the second end-surface are both closed, the push-pull holder is always accommodated in the accommodating space, and the front surface defines a through hole that is close to the second end-surface; and when the push-pull holder slides to the second position, the end of the prong is away from the accommodating space through the through hole.

12. The power adapter of claim 2, wherein the first end-surface and the second end-surface each define an opening that communicates with the accommodating space, wherein when the push-pull holder slides to the first position, the push-pull holder partially extends out of the opening of the first end-surface, and when the push-pull holder slides to the second position, the push-pull holder partially extends out of the opening of the second end-surface.

13. The power adapter of any one of claims 1 to 12, further comprising a power assembly accommodated in the accommodating space and connected with the prong and the push-pull holder, and configured to drive the prong to move relative to the push-pull holder.

14. The power adapter of claim 13, wherein the power assembly is configured to drive the prong to rotate relative to the push-pull holder.

15. The power adapter of claim 14, wherein the power assembly is provided with a torsion spring, wherein the torsion spring has one end fixedly connected with the prong and the other end fixedly connected with the push-pull holder.

16. The power adapter of claim 15, wherein the torsion spring is configured to drive the prong to rotate relative to the push-pull holder to be open.

17. The power adapter of claim 15, wherein the torsion spring is configured to drive the prong to rotate relative to the push-pull holder to be closed.

18. The power adapter of claim 14, wherein the power assembly is provided with a first magnetic member fixedly connected with the prong and a second magnetic member fixedly connected with the housing, wherein the first magnetic member and the second magnetic member are configured to magnetically cooperate with each other to drive the prong to rotate relative to the push-pull holder.

19. The power adapter of claim 18, wherein when the push-pull holder slides to the second position, the first magnetic member and the second magnetic member cooperate with each other through magnetic repulsion to drive the prong to rotate relative to the push-pull holder to be open.

20. The power adapter of claim 18, wherein when the push-pull holder slides to the first position, the first magnetic member and the second magnetic member cooperate with each other through magnetic attraction to drive the prong to rotate relative to the push-pull holder to be closed.

21. The power adapter of claim 18, wherein the first magnetic member is offset relative to a central axis of a rotating shaft of the prong.

22. The power adapter of claim 13, wherein the power assembly is configured to drive the prong to slide relative to the push-pull holder.

23. The power adapter of any one of claims 1 to 12, wherein the housing is provided with a limiting protrusion on an inner surface of the housing, the push-pull holder defines a limiting slot on an outer surface of the push-pull holder, wherein the limiting slot slidably fits the limiting protrusion, the limiting slot extends in a direction parallel to a sliding direction of the push-pull holder, and two ends of the limiting slot are closed for limiting sliding of the push-pull holder relative to the housing.

24. The power adapter of any one of claims 1 to 12, further comprising a circuit board assembly fixed in the accommodating space and electrically connected with the prong.

25. The power adapter of claim 24, wherein the housing is provided with a connector interface, and the circuit board assembly is provided with an electrical connector that matches the connector interface.

26. The power adapter of claim 24, further comprising a conductive elastic sheet and a conductive cable, wherein the conductive elastic sheet is fixed at the push-pull holder, the conductive elastic sheet has one end elastically abutting against the prong and the other end extending towards the circuit board assembly, the conductive cable has one end electrically connected with the end of the conductive elastic sheet extending towards the circuit board assembly and the other end electrically connected with the circuit board assembly, and the conductive cable is bent during movement of the push-pull holder towards the circuit board assembly.

27. The power adapter of any one of claims 1 to 12, wherein the housing defines a push-pull recess, and the push-pull holder is provided with a push-pull button that slidably fits the push-pull recess, wherein the push-pull button is configured to receive a push-pull driving force, such that the push-pull holder is slidable relative to the housing.

28. The power adapter of any one of claims 1 to 12, further comprising an elastic driving member elastically connected with the housing and the push-pull holder, wherein the elastic driving member is configured to drive the push-pull holder to slide relative to the housing.

29. The power adapter of claim 28, further comprising an unlocking part disposed at the housing, wherein the unlocking part is connected with the elastic driving member, and configured to unlock the elastic driving member to transmit a driving force of the elastic driving member to the push-pull holder.

30. The power adapter of any one of claims 1 to 12, further comprising a control part slidably connected or rotatably connected with the housing, and a transmission part connected with the control part and the push-pull holder, wherein the transmission part is configured to transmit a sliding torque or rotation torque of the control part to the push-pull holder, such that the push-pull holder is slidable relative to the housing.

31. The power adapter of any one of claims 1 to 12, further comprising a damping mechanism disposed between the housing and the push-pull holder, wherein the damping mechanism is configured to provide a damping force during sliding of the push-pull holder relative to the housing.

32. The power adapter of claim 31, wherein the damping mechanism comprises a first damping protrusion, a second damping protrusion, and a sliding protrusion, wherein the first damping protrusion and the second damping protrusion are provided on an inner wall of the housing, and the sliding protrusion is provided on an outer wall of the push-pull holder, the first damping protrusion and the second damping protrusion are spaced apart from each other along a sliding direction of the push-pull holder, the sliding protrusion is able to abut against the first damping protrusion, such that the push-pull holder is subject to a damping force when the push-pull holder is about to slide to the first position, and the sliding protrusion is able to abut against the second damping protrusion, such that the push-pull holder is subject to a damping force when the push-pull holder is about to slide to the second position.

33. The power adapter of claim 32, wherein the first damping protrusion has a first inclined surface and a second inclined surface angled relative to the first inclined surface, the second damping protrusion has a third inclined surface and a fourth inclined surface angled relative to the third inclined surface, and the sliding protrusion sequentially abuts against the first inclined surface, the second inclined surface, the third inclined surface, and the fourth inclined surface during sliding of the push-pull holder from the first position to the second position.

34. The power adapter of claim 31, wherein the damping mechanism comprises a first damping member fixed on an inner surface of the housing and a second damping member fixed on an outer surface of the push-pull holder, wherein the first damping member and the second damping member are configured to magnetically cooperate with each other, such that the push-pull holder is subject to a magnetic resisting force during sliding of the push-pull holder relative to the housing.

35. The power adapter of claim 31, wherein the damping mechanism comprises a damping elastic member disposed between the housing and the push-pull holder, wherein the damping elastic member is configured to provide an elastic force for preventing the push-pull holder from sliding relative to the housing.

36. An electronic device assembly, comprising the power adapter of any one of claims 1 to 35, the electronic device assembly further comprising an electronic device, the power adapter being configured to be electrically connected with the electronic device, and configured to transmit a current to the electronic device when the prong is plugged into a power socket.
